# EUROPEAN PATENT APPLICATION

(11) **EP 4 521 420 A1**
(43) Date of publication of application: **12.03.2025**
(21) Application number: 23833574.9
(22) Date of filing: 14.06.2023
(51) Int. Cl.: G21C 15/00, G21C 15/18, G21D 1/00, G21C 9/004, G21C 13/00

(54) **NUCLEAR POWER PLANT**

(30) Priority: 04.07.2022 JP 2022107575
(71) Applicant: Sato, Takashi, Yokohama-shi Kanagawa 236-0057 (JP)
(72) Inventor: Sato, Takashi, Yokohama-shi Kanagawa 236-0057 (JP)
(74) Representative: Valet Patent Services Limited
(86) International application number: PCT/JP2023/022168
(87) International publication number: WO 2024/009716

(57) **Abstract**

According to an embodiment, a nuclear plant has: a containment vessel used for an advanced boiling water reactor (ABWR); and a passive containment cooling system including: a cooling water pool installed above the containment vessel; a heat exchanger partly submerged in a cooling water; a condensate return pipe to return condensate generated in the heat exchanger to a suppression pool; a reactor pressure vessel injection pipe that branches from the condensate return pipe and injects condensate into a reactor pressure vessel; a gas vent pipe to vent gases generated in the heat exchanger to the suppression pool; and a gas vent fan installed on the gas vent pipe.

## Description

### FIELD

The embodiments of the present invention relate to a nuclear plant using a passive containment cooling system.

### BACKGROUND

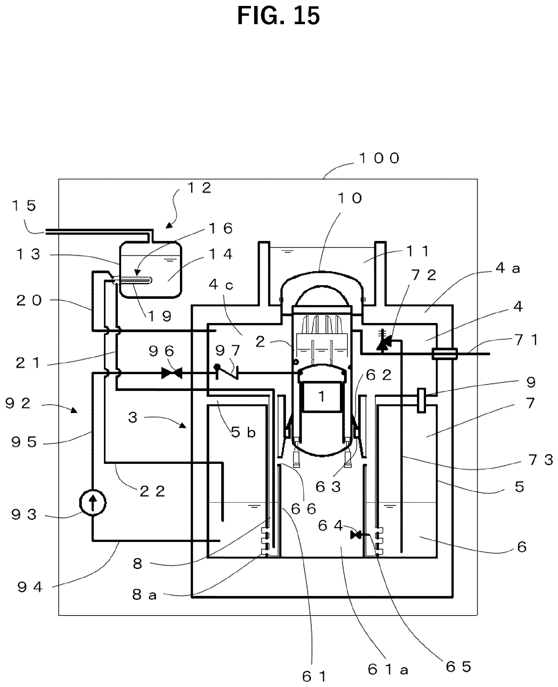

An outline of a conventional passive containment cooling system of a conventional nuclear power plant will be described with reference to FIGS. 15 to 25.

### <Explanation Relating to FIG. 15: a First Conventional Nuclear Power Plant>

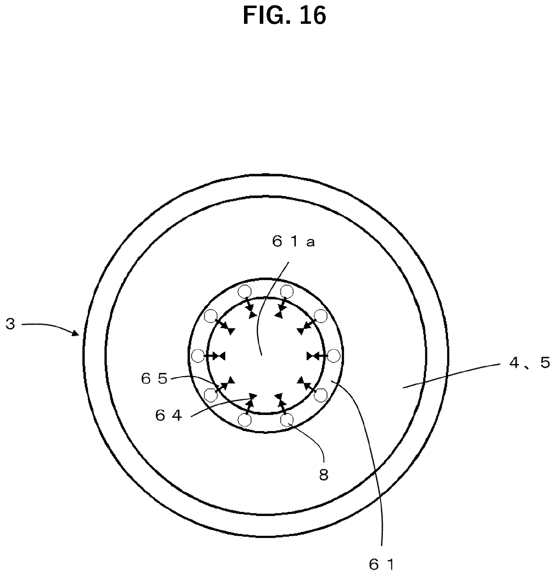

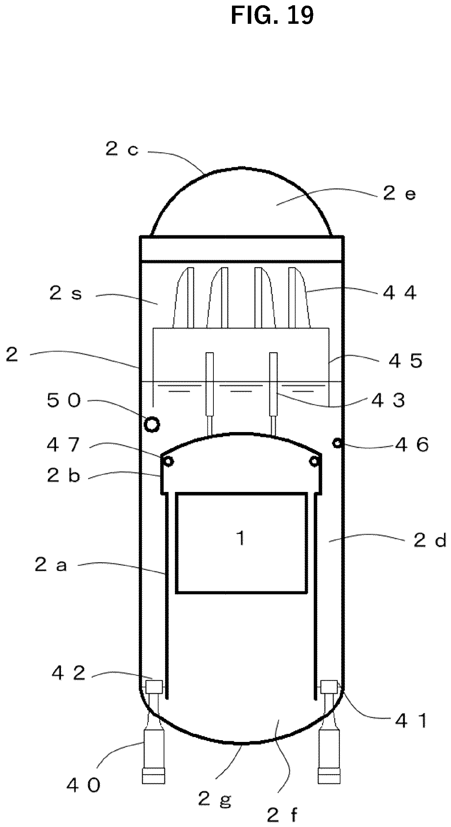

FIG. 15 is a sectional elevational view showing an example of a configuration around a containment vessel of a first conventional nuclear power plant. In FIG. 15, a core 1 is contained in a reactor pressure vessel 2. The core 1 is further contained in inside of a shroud 2a and shroud head 2b (See FIG. 19). The reactor pressure vessel 2 is contained in a containment vessel 3. The containment vessel 3 has a cylindrical shape (See FIG. 16). The inside diameter of the containment vessel 3 is about 29 m. This configuration is a configuration adopted by an Advanced Boiling Water Reactor (ABWR).

The interior space in the containment vessel 3 is partitioned into a dry well 4, which contains the reactor pressure vessel 2, and a wet well 5. The dry well 4 and the wet well 5 each constitutes a part of the containment vessel 3. The wet well 5 forms a suppression pool 6 inside. A wet well gas phase 7 is formed above the suppression pool 6. The outer wall parts of the dry well 4 and the wet well 5 are integrated to constitute a cylindrical outer wall part of the containment vessel 3. The ceiling part of the dry well 4 is a flat plate, which will be referred to as a top slab 4a of the dry well 4. The thickness of the top slab 4a is about 2.4 m.

In the case of a boiling water reactor, the atmosphere in the containment vessel 3 is inerted by nitrogen and limited to a low oxygen concentration. In the case of a boiling water reactor, the containment vessel 3 is contained in a reactor building 100.

In general, there are various types of containment vessels 3 depending on the materials. Examples include a steel containment vessel, a reinforced concrete containment vessel (RCCV), a pre-stressed concrete containment vessel (PCCV), and a steel concrete composite (SC composite) containment vessel (SCCV). In the cases of RCCV and PCCV, the inner surfaces are lined with a steel liner. FIG. 15 shows an example of an RCCV. As shown in FIG. 16, an RCCV has an outer wall part of cylindrical shape.

The reactor pressure vessel 2 is supported by a cylindrical pedestal 61 via an RPV skirt 62 and an RPV support 63. The pedestal 61 may be made of steel, concrete, or a composite structure of both. In the dry well 4, the inside space of the pedestal 61 which is surrounded by the cylindrical wall of the pedestal 61 and below the reactor pressure vessel 2 and the RPV skirt 62 is referred to as a pedestal cavity 61a. In the case of the RCCV of an ABWR, the space is referred to as a lower dry well in particular. In the case of the RCCV of an ABWR, the cylindrical wall of the pedestal 61 forms a boundary wall between the wet well 5 and the dry well 4.

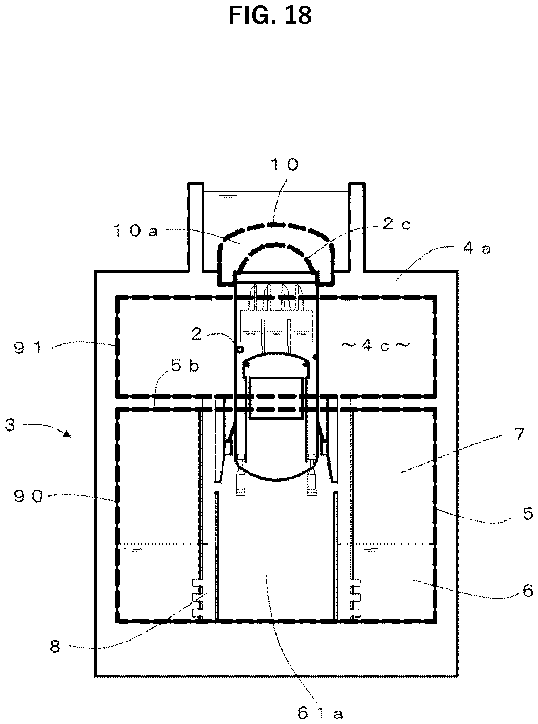

In the case of the RCCV of an ABWR, the inside space of the dry well 4 above the RPV skirt 62 is referred to as an upper dry well 4c. The ceiling of the wet well 5 is a flat plate and constitutes the boundary between the wet well 5 and the upper dry well 4c. This part also constitutes a floor of the upper dry well 4c and is referred to as a diaphragm floor 5b. The height between the diaphragm floor 5b and the top slab 4a is about 9 m. A region of the containment vessel 3 below the diaphragm floor 5b is referred to as a lower region 90. A region of the containment vessel 3 above the diaphragm floor 5b and below the top slab 4a is referred to as an upper region 91. The lower region 90 and the upper region 91 include spaces, pools and components in each region (See FIG. 18).

A containment vessel head 10 is arranged above the reactor pressure vessel 2. A water shield 11 is arranged over the containment vessel head 10.

A main steam pipe 71 extends from the reactor pressure vessel 2 to outside the dry well 4. A safety relief valve (SRV) 72 is arranged on the main steam pipe 71. A discharge pipe 73 is arranged to be submerged in the suppression pool 6 so that the steam in the reactor pressure vessel 2 is released into the suppression pool 6 if the safety relief valve 72 is activated.

The dry well 4 and the suppression pool 6 are connected by LOCA vent pipes 8. There are installed a plurality of, for example, ten LOCA vent pipes 8, whereas FIG. 15 shows only two of them (See FIG. 16). The LOCA vent pipes 8 have horizontal vent pipes 8a in the portions submerged in the pool water of the suppression pool 6. The horizontal vent pipes 8a open in the pool water. In the case of an RCCV, three horizontal vent pipes 8a are vertically arranged on each LOCA vent pipe 8. In the case of the RCCV the LOCA vent pipes 8 are installed through the cylindrical wall of the pedestal 61. In the case of the RCCV, the cylindrical wall of the pedestal 61 is thus also referred to as a vent wall. The vent wall is made of reinforced concrete with a thickness of approximately 1.7 m. The inner and outer surfaces are made of steel. The LOCA vent pipes 8 and the pedestal 61 constitute a part of the containment vessel 3.

A vacuum breaker 9 is provided for the purpose of letting gases in the wet well gas phase 7 flow back into the dry well 4. There are provided a plurality of, for example, eight vacuum breakers 9, whereas FIG. 15 shows only one of them.

The vacuum breaker 9 may be installed on the wall surface of the wet well 5, on the ceiling of the wet well 5, and on the LOCA vent pipes 8. The vacuum breaker 9 is activated to open if the pressure in the wet well 5 exceeds that in the dry well 4 and the difference in pressure exceeds a set pressure difference. For example, the set pressure difference of the vacuum breaker 9 is approximately 2 psi (approximately 13.79 kPa). The vacuum breaker 9 constitutes a part of the containment vessel 3.

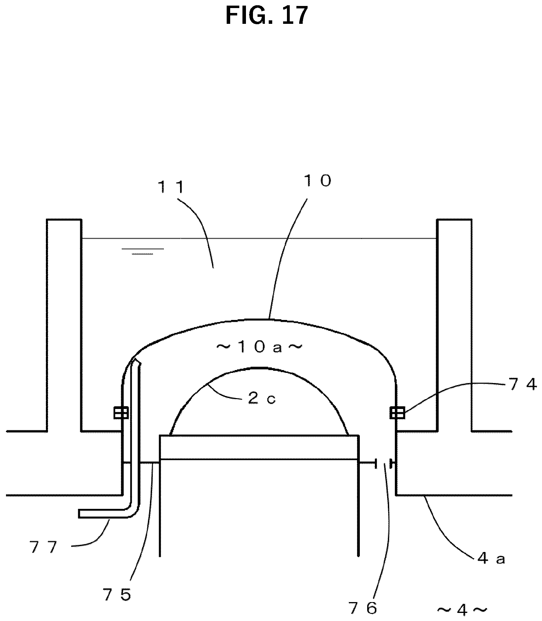

### <Explanation Relating to FIG. 17: Configuration of Top Head Section>

FIG. 17 shows a configuration of a top head section 10a. Atop head 10 of the containment vessel 3 is arranged in the center portion of the top slab 4a of the dry well 4. A water shield 11 is arranged over the top head 10. By the way, among the constructed plants, only the Mark III containment vessel has a water shield. Concrete shield blocks are arranged in other operating BWR plants. The ESBWR adopts a water shield. However, it is not constructed yet as of the filing date of the present invention.

The top head 10 is made of steel and configured to be able to be removed at a portion of a flange 74 during refueling. The flange 74 is circular along an opening of the tope head 10 although only two cross sections at left and right sides are shown in FIG. 17. A sealing material (not shown) is inserted in the joint section of the flange 74 to keep airtightness. It is confirmed by tests that the sealing material has heat resistance to keep airtightness at 200 degrees Celsius up to at least 168 h. The flange 74 is fastened by bolts (not shown) so that the top head 10 of the containment vessel 3 is closed during normal operation.

An upper portion of the reactor pressure vessel 2 including a head portion 2c of the reactor pressure vessel 2 is contained inside of the top head 10. A platform 75 is arranged between the reactor pressure vessel 2 and the containment vessel 3. A bellows (not shown) is arranged between the reactor pressure vessel 2 and the platform 75 so that the joint is maintained flexibly to keep watertightness even if a deviation happens due to thermal expansion or an earthquake. The space surrounded by the top head 10 of the containment vessel 3, the platform 75, and the portion of the reactor pressure vessel 2 that is above the platform 75 is referred to as a top head section 10a. Several of manholes 76 are arranged on the platform 75 and opened during normal operation. Only one manhole is shown in FIG. 17. The top head section 10a is a space having relatively high airtightness because the open area of the manholes 76 is limited.

Heat insulators (not shown) are installed around the reactor pressure vessel 2 in order to limit heat release during normal operation. A certain amount of heat release nevertheless occurs through the heat insulators. Heat release occurs from the head portion 2c of the reactor pressure vessel 2 to the top head section 10a during normal operation. Several of ventilation ducts 77 are arranged through the platform 75 in order to prevent the temperature in the top head section 10a from heating up during normal operation. Only one ventilation duct is shown in FIG. 17. Temperature in the top head section 10a can be maintained low by low temperature gases (mainly nitrogen) provided from a dry well cooler (not shown) through the ventilation ducts 77. Heated gases are exhausted through the manholes 76 into the dry well 4 and return to the dry well cooler. The temperature in the top head section 10a is maintained low during normal operation as gases therein are forcedly ventilated in this way. During refueling the top head 10 of the containment vessel 3 is opened. The manholes 76 and the ventilation ducts 77 are closed to keep watertightness. Then the top head section 10a can be filled with water for shielding.

### <Explanation Relating to FIG. 18: Regions in the Containment Vessel 3>

FIG. 18 shows regions in the containment vessel 3. The lower region 90 is a region that is inside of the containment vessel 3 and lower than the diaphragm floor 5b. The lower region 90 includes the wet well 5, the wet well gas phase 7, the suppression pool 6, the LOCA vent pipes 8, the lower dry well 61a, a core catcher (not shown).

The upper region 91 is a region that is inside of the containment vessel 3 and above the diaphragm floor 5b and below the top slab 4a. The upper region 91 includes a part of the upper dry well 4c, a part of the reactor pressure vessel 2, and a part of components in the reactor pressure vessel 2.

The top head section 10a is a space that is inside of the containment vessel 3 and surrounded by the top head 10, the platform 75, the head portion 2c of the reactor pressure vessel 2 and a part of the reactor pressure vessel 2. The top head section 10a is a space and does not include the head portion 2c of the reactor pressure vessel 2.

### <Explanation Relating to FIG. 19: the Reactor Pressure Vessel 2 and Reactor Internals>

FIG. 19 shows the reactor pressure vessel 2 and reactor internals. FIG. 19 shows an example of the reactor pressure vessel 2 and reactor internals of an Advanced Boiling Water Reactor (ABWR). The origin of a Boiling Water Reactor (BWR) is a Pressurized Water Reactor (PWR). The ABWR established an ultimate simplification and large power by eliminating steam generators (SG), a pressurizer, accumulators, hot leg pipes and cold leg pipes from a PWR. While a 4-loop large PWR now has 4 steam generators (SG), 1 pressurizer, 4 accumulators, 4 cold leg pipes and 4 hot leg pipes, all of these components are eliminated in the ABWR. While a large PWR installs no less than 10 primary high-pressure vessels in a containment vessel, the ABWR has only 1 reactor pressure vessel 2 in the containment vessel 3. Moreover, the price of one steam generator (SG) is more expensive than the reactor pressure vessel 2 of the ABWR because SG has a delicate equipment of SG tubes inside. The cost of a large PWR is now no less than about USD17 billion and huge. It is over the limit of affordable level. This is the result of that a PWR continued power increase only by increasing the number of loops without any innovation. Then, development of small modular reactors (SMR) by simplifying a PWR are prevailing nowadays. If you simplify a PWR by eliminating external SG and adopting internal SG, the reactor power must be small because internal SG is installed inside of the reactor pressure vessel and must be small. Small power is one of the problems of SMR. Therefore, SMR needs modularization for large power. The ABWR power is 1315 MWe net. If you want to generate equivalent power to the ABWR by small 77 MWe net SMR, you need about 17 reactor modularizations. The ABWR, however, does not have any small power limitation because it eliminated SG itself. The ABWR has established ultimate simplification and large power simultaneously. The ABWR has no internal SG in the reactor pressure vessel 2 and much more simplified than a reactor module of SMR. Moreover, the ABWR does not need modularization at all. The ABWR can generate large power as much as 1315 MWe net with only one reactor pressure vessel 2.

Shroud 2a and shroud head 2b are arranged in the reactor pressure vessel 2. Shroud 2a and shroud head 2b are unified and constitute a watertight container. The core 1 is arranged inside of the shroud 2a and shroud head 2b. Shroud 2a and shroud head 2b divide the inside of the reactor pressure vessel 2 into two portions. The portion outside of the shroud 2a and shroud head 2b in the reactor pressure vessel 2 is referred to as a downcomer 2d. A feedwater sparger 50 is arranged above the downcomer 2d. Although the feedwater sparger 50 is circular, only one side cross section of the feedwater sparger 50 is shown for simplicity. Feedwater is provided to the feedwater sparger 50 from a feedwater pipe (not shown). Feedwater is provided to the downcomer 2d in this way but not provided directly to the core 1.

Reactor internal pumps 40 are installed below the shroud 2a. Reactor internal pumps 40 have modular configuration that uses plurality of identical pump modules. For example, 10 reactor internal pumps 40 are installed for a 1350 MWe class ABWR. Only two of the reactor internal pumps 40 are shown in the figure for simplicity. By the way, the ABWR can change rated power by changing the number of modules of the reactor internal pumps 40. For that reason, it is not necessary for the ABWR to adopt such a design to modularize whole the plant where plurality of the reactor pressure vessels 2 and the containment vessels 3 are arranged in modular configuration.

Feedwater provided to the downcomer 2d via the feedwater sparger 50 is then provided to the core 1 by the reactor internal pumps 40 through the lower part of the shroud 2a. A pump deck 41 is arranged between the lower part of the shroud 2a and the side wall of the reactor pressure vessel 2. Diffusers 42 of the rector internal pumps 40 are arranged penetrating the pump deck 41. Impellers (not shown) are installed in the diffuser 42. Feedwater in the downcomer 2d is forcedly pushed into the shroud 2a by the impellers and the diffuses 42.

Plurality of steam separators 43 are installed over the shroud head 2b. Only two are shown in FIG. 19 for simplicity. It is configured that two-phase flow of water and steam from the shroud head 2b flows into the steam separators 43. Steam dryers 44 and a steam dryer skirt 45 are further arranged over the steam separators 43. Although plurality of steam dryers 44 are arranged, only four are shown for simplicity.

The water pushed into the shroud 2a by the reactor internal pumps 40 goes up and reach the core 1. The water is heated by the heat from the nuclear fuels in the core 1. Some of the water is boiled and generates steam. Two-phase flow of water and steam goes up inside the core 1 and shroud head 2b and flows into the steam separators 43. Steam and water are separated by the steam separators 43. Steam further flows into the steam dryers 44. The separated water flows out the steam separators 43 and becomes reactor water. As a result, the water level during normal operation is formed at about the middle position of the steam separators 43. The reactor water communicates between inside and outside of the steam separator skirt 45 and forms the same water level. Steam occupies the space above the water level and forms vapor phase 2s. The steam dryers 44 further eliminate droplets in the steam flowing into them and make dry steam. The dry steam moves into the steam dome 2e and vapor phase 2s and is provided to a turbine (not shown) via the main steam pipe 71 (See FIG. 15). The pressure of the steam in the steam dome 2e also pressurizes the reactor water in the downcomer 2d. Namely, the pressure in the vapor phase 2s which is above the reactor water level in the reactor pressure vessel 2 is equalized by steam pressure. Because of this, when the reactor internal pumps 40 inject water in the downcomer 2d into the core, the steam pressure in the core 1 is canceled out by the steam pressure in the vapor phase 2s and does not cause resistant pressure.

In this way, in the ABWR, only the steam generated in the reactor is provided for the turbine. Most of reactor water is separated by the steam separators 43, mixed with feedwater again and recirculates in the reactor pressure vessel 2. Moreover, coolant flow rate can be greatly minimized because cooling of core fuel utilizes latent heat of vaporization of phase change of coolant. Because of this, capacity of the reactor coolant pumps can be greatly minimized in comparison with a PWR where all the reactor core water is pushed into the SG without vaporization and recirculation. Because of this, auxiliary power ratio of the ABWR is no more than 3 % and greatly smaller than that of a PWR which is about 7% to 10%. In the case of a PWR, so much power about 7% to 10% is consumed for forced circulation of coolant, and so on.

A sparger 46 of a low-pressure flooder system (LPFL) is arranged in the reactor pressure vessel 2. The sparger 46 of the LPFL injects coolant in to the downcomer 2d. A sparger 47 of a high-pressure core flooder system (HPCF) is also arranged in the shroud head 2b. Although the spargers 46, 47 are circular, only cross sections are shown for simplicity.

### <Explanation Relating to FIG. 15: the High-pressure Core Flooder System >

FIG. 15 shows the configuration of the high-pressure core flooder system (HPCF) 92. The high-pressure core flooder system 92 is configured to suck the water in the suppression pool 6 via the suction pipe 94, pressurize the water by the high-pressure core flooder system pump 93, send the water via the injection pipe 95 to the sparger 47 in the shroud head 2b, and be able to sparge the water directly over the core. This design to spray water of the high-pressure core flooder system 92 directly over the core 1 in a loss of coolant accident is intended and aimed at boiling suppression of the core in a loss of coolant accident. This design was done by the inventor of the present invention. At first Hitachi and GE strongly objected this design. After a heated discussion, GE agreed by a different reason. Hitachi persisted in objection but finally agreed. Beside the boiling suppression, the inventor further considered that the HPCF injection pipe should be maintained inside the shroud in preparation for the situation where a core spray is needed because the inventor concerned that a core spray had been eliminated from the ABWR by the excuse of no core uncovery during a loss of coolant accident. The inventor considered that even the ABWR by a reason unknown clearly yet, there might be still a situation where it is necessary to spray cooling water directly over the core fuel, namely, core uncovery might happen. Furthermore, the ABWR has two systems of the high-pressure core flooder system 92 although FIG. 15 shows only one system for simplicity. This was also intended by the inventor of the present invention to increase the number of motor driven high-pressure injection systems, while up to BWR/6 only one system was equipped. This was intended by the inventor to reduce the activation frequency of the automatic depressurization system (ADS) (not shown) and to reduce the core melt frequency (CDF) of the ABWR by reducing the frequency of the high-pressure scenario in the probabilistic risk assessment (PRA) called TQUX. The effect of reducing ADS activation frequency has a safety importance that the PRA can never tell because the PRA count only CDF. This design has the effect to reduce stress of operators during a transient and prevent human errors. This design was also done by the inventor of the present invention. The outer isolation valve 96 and the inner isolation valve 97 are installed on the injection pipe 95 at the portion of penetration of the dry well 4. The outer isolation valve 96 is a motor operated valve. The inner isolation valve is a check valve.

### <Explanation Relating to FIG. 15: PCCS in the First Conventional Nuclear Power Plant>

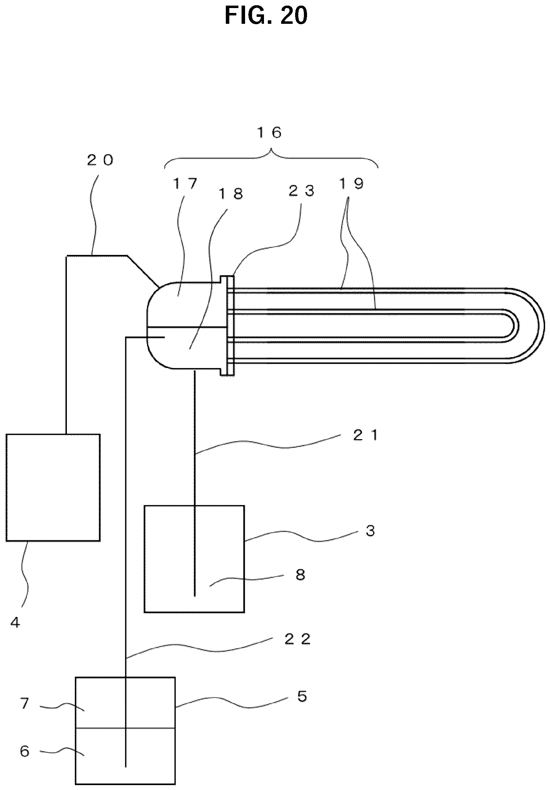

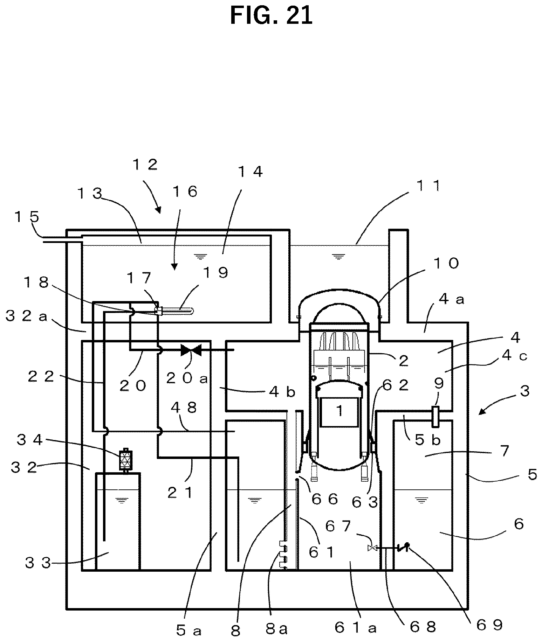

The configuration of a passive containment cooling system (PCCS) 12 of the first conventional nuclear power plant will be described with reference to FIG. 15 and FIG. 20. A cooling water pool 13 is arranged over the containment vessel 3 and stores cooling water 14 inside. FIG. 15 shows an example of the cooling water pool 13 of a tank type, whereas the cooling water pool 13 may be of a pool type. In the case of the pool type, the cooling water pool 13 is covered with a lid from above (See FIG. 21). FIG. 15 shows an example where the cooling water pool 13 and the like are installed inside the nuclear reactor building 100. However, the cooling water pool 13 and the like may be installed in an adjacent auxiliary building or the like.

An exhaust port 15 for releasing steam to the environment is extended from the gas phase above the water surface in the cooling water pool 13. An insect screen may be arranged on the outlet of the exhaust port 15. The cooling water pool 13 is usually located above the containment vessel 3. However, the cooling water pool 13 may be arranged beside the containment vessel 3.

A heat exchanger 16 is installed in the cooling water pool 13 to be submerged at least in part in the cooling water 14. A plurality of the heat exchangers 16 may often be installed, although FIG. 15 shows only one. The heat exchanger 16 includes an inlet plenum 17, an outlet plenum 18, and heat exchanger tubes 19 (See FIG. 20). The heat exchangers 16 in total have at least a cooling capacity to condensate steam equivalent to decay heat.

FIG. 15 shows an example in which only the heat exchanger tubes 19 are installed inside the cooling water pool 13, and the inlet plenum 17 and the outlet plenum 18 protrude out of the cooling water pool 13. However, the configuration is not limited to this example. For example, the entire heat exchanger 16, including the inlet plenum 17 and the outlet plenum 18, may be installed inside the cooling water pool 13 (See FIG. 21).

The inlet plenum 17 is connected with a dry well gas supply pipe 20 for supplying gases in the dry well 4. One end of the dry well gas supply pipe 20 is connected to the dry well 4.

A condensate return pipe 21 is connected to a lower part of the outlet plenum 18 (See FIG. 20). FIG. 15 shows an example in which one end of the condensate return pipe 21 is led into a LOCA vent pipe 8. However, the configuration is not limited to this example. For example, one end of the condensate return pipe 21 may be led into a core catcher (not shown) in the lower part of the lower dry well 61a. In the case where one end of the condensate return pipe is led into the LOCA vent pipe 8, the condensate is also eventually returned to the core catcher (not shown) in a lower part of the lower dry well 61a via a fusible valve 64.

In this way, the condensate from the condensate return pipe 21 is intended to cool the core debris that dropped onto a floor of the lower D/W 61a or the core catcher (not shown) in a severe accident. This was based on the erroneous concept of core catcher supremacists (See Patent Documents 3 and 4). They considered that it was the most important thing and well enough by itself in a severe accident to cool the core debris that dropped onto the floor of the lower D/W 61a or the core catcher (not shown) in order to prevent melt through of a concrete mat. The Fukushima Daiichi accident lessons learned, however, showed that melt through of the floor of the pedestal cavity 61a did not happen but that it is rather important to provide protections against over temperature failures of the containment vessel 3 and releases of radioactive materials with large amount of hydrogen due to failure of the sealing material of the flange 74 on the top head 10 of the containment vessel 3.

A gas vent pipe 22 is also connected to an upper part of the outlet plenum 18 (See FIG. 20). One end of the gas vent pipe 22 is led into the wet well 5 and installed to be submerged in the suppression pool 6. The gas vent pipe 22 is installed so that the submergence in the suppression pool 6 is smaller than the submergence of the topmost end of the horizontal vent of the LOCA vent pipes 8 in the suppression pool 6.

### <Explanation Relating to FIG. 15: Lower Dry well Flooder Pipe>

In preparation for a core meltdown in the event of a transient event such as a station blackout (SBO), the present prior art has fusible valves 64 and lower dry well flooder pipes 65 inside the pedestal cavity 61a. The lower dry well flooder pipes 65 are extended from the LOCA vent pipes 8 through the wall of the pedestal 61 and connected to the fusible valves 64. The fusible valves 64 and the lower dry well flooder pipes 65 are installed on all the LOCA vent pipes 8 (See FIG. 16). If the temperature in the lower dry well 61a reaches approximately 260 degrees Celsius, low melting point plug portions of the fusible valves 64 melt to open. In a core meltdown accident, the corium melts the bottom of the reactor pressure vessel 2 through and falls into the pedestal cavity 61a. This increases the temperature in the pedestal cavity 61a abruptly, and the fusible valves 64 open and the cooling water in the LOCA vent pipes 8 flows into the pedestal cavity 61a through the lower dry well flooder pipes 65 to flood and cool the corium. This design of fusible valves 64 is adopted in the US-ABWR.

### <Explanation Relating to FIG. 20: PCCS Heat Exchanger>

FIG. 20 is a sectional elevational view showing an example of the heat exchanger of the passive containment cooling system in the first conventional nuclear power plant. Referring to FIG. 20, the structure of the heat exchanger 16 of the passive containment cooling system 12 in the first conventional nuclear power plant will be described by using an example of a horizontal heat exchanger.

In FIG. 20, the outlet plenum 18 is arranged below the inlet plenum 17. A large number of U-shaped heat exchanger tubes 19 are connected to a tube plate 23. The straight portions of the heat exchanger tubes 19 are installed horizontally. FIG. 20 shows only two of the heat exchanger tubes 19 in a simplified manner. The outside of the heat exchanger tubes 19 is filled with the cooling water 14 (See FIG. 15). The inlets of the heat exchanger tubes 19 are opened to the inlet plenum 17. The outlets of the heat exchanger tubes 19 are also opened to the outlet plenum 18.

The dry well gas supply pipe 20 is connected to the inlet plenum 17, and supplies mixed gases of nitrogen, oxygen, steam and the like in the dry well 4 to the inlet plenum 17. The mixed gases are led into the heat exchanger tubes 19. The steam condenses into condensate, which flows out of the outlets of the heat exchanger tubes 19 into the outlet plenum 18 and accumulates in the lower part of the outlet plenum 18.

The condensate return pipe 21 is connected to the lower part of the outlet plenum 18. The condensate return pipe 21 returns the condensate in the outlet plenum 18 into the LOCA vent pipes 8 in the containment vessel 3 by gravity. The gas vent pipe 22 is connected to the upper part of the outlet plenum 18. Noncondensable gases that do not condense in the heat exchanger tubes 19, such as nitrogen, hydrogen and oxygen, are discharged from the heat exchanger tubes 19 and accumulate in the upper part of the outlet plenum 18.

The end of the gas vent pipe 22 is led to the suppression pool 6. The noncondensable gases in the outlet plenum 18 pass through the gas vent pipe 22, push down the pool water in the suppression pool 6, are vented into the pool water and then move to the wet well gas phase 7

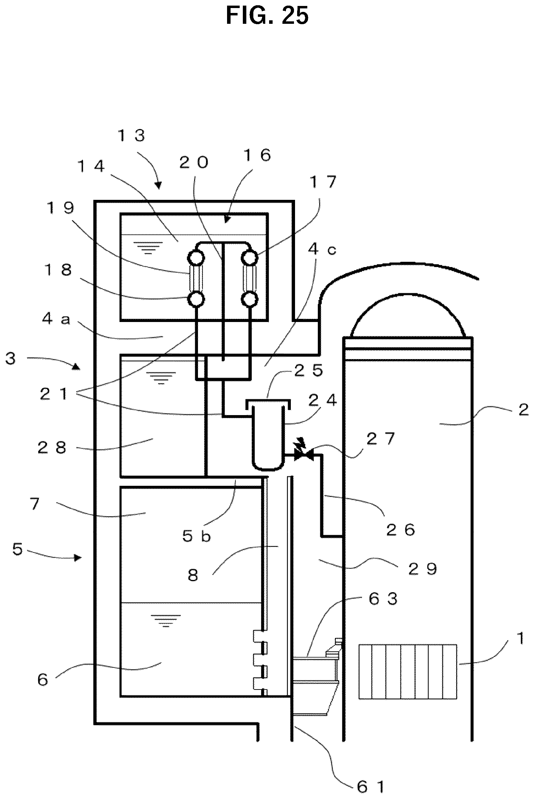

The shape of the heat exchanger tubes 19 is not limited to the U-shaped type. There is also a vertical type heat exchanger structure that installs the heat exchanger tubes 19 having vertically straight tube portions (See FIG. 25). The inlet plenum 17 is always positioned above the outlet plenum 18. Thus, the condensate condensed in the heat exchanger tubes 19 is led into the outlet plenum 18 by gravity. The advantages of the horizontal type are good seismic performance and effective utilization of the cooling water 14. On the contrary, the advantage of the vertical type is good drain capability of the condensate.

### <Explanation of Functions of the PCCS>

Next, functions of the conventional passive containment cooling system 12 configured as such in a severe accident will be described.

If a severe accident occurs and damage of the core 1 begins in the reactor pressure vessel 2, a large amount of hydrogen is generated by metal-water reaction between the cladding of heated core fuels and the coolant. This hydrogen is released by the safety relief valve 72 to the suppression pool 6 and transferred to the wet well gas phase 7. As the atmosphere in the wet well gas phase 7 is inerted by nitrogen to lower the oxygen concentration, no detonation of hydrogen occurs. The pressure in the wet well gas phase 7 rises due to the hydrogen in addition to the originally existing nitrogen.

Further, as melting of core fuels progresses, debris (high-temperature substance of wrecks of the melted core 1 releasing heat owing to decay heat) melts the bottom of the reactor pressure vessel 2 and drops into the lower part of the pedestal cavity (the lower dry well) 61a. As the fusible valves 64 open due to the heat of debris, water in the LOCA vent pipes 8 flows into the lower dry well 61a through the lower dry well flooder pipes 65 and floods the debris. At the moment a large amount of steam is generated. The steam by its own pressure flows into the upper dry well 4c via openings 66 of the LOCA vent pipes 8. Further, through the dry well gas supply pipe 20, the steam is led to the heat exchanger 16 of the passive containment cooling system 12 and condensed. At this moment, noncondensable gases generated in the heat exchanger 16 are vented to the wet well 5 by the gas vent pipe 22. In this situation, as the pressure in the dry well 4 is higher than that of the wet well 5, the noncondensable gases efficiently vented to the wet well gas phase 7. The condensate is returned to the LOCA vent pipe 8 in the containment vessel 3 by the condensate return pipe 21, passing thorough the fusible valve 64, used again for cooling of the debris that has dropped on a base of the lower dry well 61a.

The debris that has dropped on the base of the lower dry well 61a has decay heat. It continues to heat up the water collected in the lower part of the lower dry well 61a and generate steam. The steam, by its own pressure and through the dry well gas supply pipe 20, flows into the heat exchanger 16 of the passive containment cooling system 12 and is continuously cooled by the heat exchanger tubes 19. In this way, as the cooling of the debris that dropped in the lower dry well is carried out, it was supposed that the containment vessel 3 was also cooled.

### <Explanation of Heating by In-Core Residual Debris>

Based on the consequence of the Fukushima Daiichi accident, however, it is realized that 100% of core debris does not drop to the lower D/W but that about 20% of core debris remains in the core. Namely, it means that the conventional passive containment cooling system 12 can only cool about 80% core debris that dropped in the lower dry well 61a. On the other hand, about 20% debris remaining in the core is not flooded, heats up without water, and continues to release decay heat. For that reason, the temperature in the reactor pressure vessel 2 rises to about 1000 degrees Celsius. Because the rector pressure vessel 2 heats up and continues to release heat, there are cases where the temperature in the dry well 4 keeps over 200 degrees Celsius in the long term. Namely, it becomes realized that there are cases where the cooling of the containment vessel 3 is not carried out sufficiently.

Especially, the top head section 10a of the containment vessel 3 is separated by the platform 75 and forms a confined and low gas permeability region. In the normal operation the temperature in the top head section 10a is maintained low as the low temperature gases are provided from the ventilation ducts 77. However, in the case where a severe accident occurs due to a station blackout (SBO), as the dry well cooler (not shown) stops due to loss of power, there are cases where the temperature in the top head section 10a is kept over 300 degrees Celsius in the long term due to heat release from the head portion 2c of the reactor pressure vessel 2. There is the flange 74 on the PCV top head 10. A sealing material (not shown) is inserted in the joint section of the flange 74 to keep airtightness. There is a concern that the sealing material is damaged if heated over 200 degrees Celsius so that a large amount of gases in the containment vessel 3 such as hydrogen leak out. The outer surface temperature of the PCV top head 10 does not much exceed 100 degrees Celsius because it is cooled by the water shield 11. However, it is not desirable that the situation where the inside temperature of the PCV top head section 10a is maintained over 300 degrees Celsius.

In the case of Fukushima Daiichi accident, there was no water shield 11 and the PCV top head 10 was covered only by the shielding of concrete block. Therefore, it is supposed that a large amount of hydrogen and radioactive materials and the like were released to the operating floor from the deteriorated sealing material of the flange 74 caused by abnormally high temperature of the PCV top head section 10a.

Later, it is under consideration to sparge water on the PCV top head 10 from outside using a portable device as a voluntary measure, not a mandatory requirement of the Japanese Nuclear Regulation Authority (NRA). However, there is some possibility that cooling from outside is not sufficient. It is necessary to cool the heat source of the residual debris in the reactor pressure vessel 2 in order to lower the temperature in the PCV top head section 10a. It is unknown for that reason or not, the NRA requires, in the Requirement Details of the Article 42 of the New Regulatory Requirements, that cooling function of molten core in the reactor shall be prepared (Example: equipment for injecting low-pressure water inside the reactor). Presumably, in order to relieve a PWR, the example is added to endorse that the low-pressure injection equipment is allowable. Originally, an alternate high-pressure reactor injection system shall be installed additionally as a core melt prevention measure in an SBO. An alternate high-pressure injection system could be installed additionally in a BWR because the reactor pressure is moderate. However, this is difficult for a PWR because the reactor pressure is too high that such a high-pressure system could not be installed additionally. Therefore, it is supposed that the Article 42 was a relief measure for a PWR to mitigate the regulatory requirement and compromise by installing additionally only an alternate low-pressure injection system that can function only after core melting. This relief measure, however, is very effective as a cooling means for the residual debris in the reactor pressure vessel 2. It would be very wonderful if the NRA had realized this.

Further, a plant not adopting a core catcher but adopting In-vessel Retention (IVR) (The bottom head of the reactor pressure vessel is cooled from outside and melt through of the reactor pressure vessel is avoided. The debris inside the reactor pressure vessel, however, is not cooled and heats up without water.) does not meet the New Regulatory Requirements of the Japanese NRA because such a plant does not have a function to cool the molten core in the reactor pressure vessel after a core melt. Moreover, it means not only that the plant does not meet the regulatory requirement of the NRA, but also that there is a risk of overheat failures of the containment vessel due to heat release from the molten core that heats up without water in the reactor pressure vessel although prevention of the melt through of the reactor pressure vessel is possible in a severe accident. In the case of IVR, heat release continues from not only about 20 % residual debris but perfect 100 % residual debris in the reactor pressure vessel. Therefore, there is a risk that a large amount of hydrogen and radioactive materials are released outside from a deteriorated seal material of an equipment hatch due to local heat up of a containment vessel. This is one of the important lessons learned of the Fukushima Daiichi accident. The lessons learned of the Fukushima Daiichi accident teach that protections for not only melt thorough but also overheat failures of a containment vessel are more important. The lessons learned teach that there is a possibility that IVR causes overheat failures of a containment vessel. However, in a phenomenology analysis code, analysis model that can treat correctly residual debris in the core of a PWR was not developed. Therefore, there is a concern that the risk of overheat failures of a containment vessel due to residual debris in the core remained overlooked in the development of an innovative PWR as of the filing date of the present invention.

In the case of the conventional PWR in Japan, different from the AP1000 and the EPR, there is no means to depressurize the reactor pressure vessel in an SBO. Therefore, even if an alternate low-pressure injection system is installed additionally, it can inject water into the core only after core melt occurred and the reactor is depressurized due to rupture of the bottom of the reactor pressure vessel. Thus, it is supposed that the requirement of the NRA becomes to require the cooling function of the molten core in the reactor instead of prevention of core melt.

In the case of a BWR, however, it is possible to equip an alternate high-pressure injection system. Moreover, it is possible to depressurize the reactor pressure vessel by the automatic depressurization system (ADS) in an SBO and inject water by an alternate low-pressure injection system. Therefore, a BWR can even prevent core melt if these alternate injection systems are equipped. As the NRA requirement, however, is aiming at relief of a PWR, it requires cooling function of *molten* core in the reactor *after core melt.* Therefore, in the case of a BWR, even if an alternate injection system is equipped and it can prevent core melt, it is not until core melt occurs that the alternate injection system can be used. Namely, a BWR has to wait for generation of *molten* core purposely although it can prevent core melt by the alternate injection system. Therefore, a BWR is forced to do such a stupid thing as setting the activation signal of the alternate injection system to initiate after sensing abnormally high radiation level in the containment vessel 3 caused by occurrence of core melt. In accordance with a PWR which cannot prevent core melt even if an alternate injection system is initiated, a BWR purposely has to cause core melt by interlocking to prohibit initiation of the alternate injection system although a BWR can prevent core melt by the alternate injection system. What a stupid ending! However, actually the NRA and a PWR are not to blame. The concept of stereotype is to blame that an active alternate injection system should be used for cooling of the residual debris in the rector pressure vessel 2. The NRA requires only that cooling function of molten core in the reactor shall be prepared. The NRA does not necessarily require an active alternate injection system. The NRA requires to cool molten core in the reactor by any means. The present invention teaches ideal solutions for the requirement.

### <Explanation for Stratification of the Water Temperature in the Suppression Pool>

Another phenomenon that is realized by the Fukushima Daiichi accident consequences is stratification of the water temperature in the suppression pool. The following explanation is based on a plant that has no passive containment cooling system 12 in those days of the Fukushima Daiichi accident. If a severe accident occurs, a large amount of hydrogen generated by metal-water reaction of core fuels is released by the safety relief valve 72 to the suppression pool 6 and transferred to the wet well gas phase. The pressure in the wet well gas phase rises due to the hydrogen. Further, debris drops down to the lower part of the reactor pressure vessel 2, breaks the lower part of the reactor pressure vessel 2, and drops onto the floor of the lower dry well 61a. As the fusible valves 64 activate due to debris heat, the water in the LOCA vent pipes 8 flows into the lower dry well 61a. Then a large amount of high-pressure steam is generated by debris heat. The steam transfers to the upper dry well 4c via the openings 66. The steam also pushes down the water level in the LOCA vent pipes 8, transfers to the suppression pool 6 through the horizontal vent pipes 8a, and condenses by the pool water. At the same time, nitrogen existed in the dry well 4 and the residual hydrogen generated by metal-water reaction of core fuels are vented with the steam to the suppression pool 6. The nitrogen and the hydrogen are transferred to the wet well gas phase 7. The pressure of the wet well gas phase 7 further goes up closely to the failure limit.

By this process, the decay heat of the debris that dropped on the floor of the lower dry well 61a is transferred to the pool water of the suppression pool 6. Then the temperature of the pool water goes up. It becomes realized that stratification of the temperature of the pool water occurs when the temperature of the pool water goes up. Because the depth of the pool water of the suppression pool 6 is deep and no less than about 7m, the hotter the water is, the higher the water moves up, while cool water settles down in lower portion. Therefore, it becomes realized that stratification of the temperature of the pool water occurs from lower layers to upper layers. It is confirmed that stratification of the temperature of the suppression pool actually occurred in the Fukushima Daiichi accident.

If stratification of the water temperature of the suppression pool occurs, the pool water of water surface part becomes saturated in a short time and generates high-pressure steam. As a result, high-pressure steam can't help generating into the wet well gas phase 7 although the average temperature of the total pool water does not reach saturation yet. A large amount of hydrogen and nitrogen in the dry well 4 already have transferred to the wet well gas phase 7. The pressure of the wet well gas phase 7 has already risen to almost the limiting point by the pressure of those noncondensable gases. In addition, as the high-pressure saturated steam is generated from the pool water of water surface part, the pressure of the wet well gas phase 7 becomes abnormally high. Moreover, the pressure of the dry well 4 exceeds the limiting point in accordance with pressurization of the wet well gas phase 7 (This is because the pressure of the dry well 4 is higher as much as the vent clear water head of the horizontal vent 8a than that of the wet well 5.) In this situation, as there is a possibility of overpressure failures of the containment vessel 3, the NRA requires to equip a filtered venting system. The filtered venting system is a dangerous system to release radioactive organic iodine and radioactive noble gases that generated in the containment vessel 3 directly to the environment. In order to avoid the risk, the people in the surrounding area must evacuate before the filtered venting system is activated. However, it becomes realized that the timing of the filtered venting system must be activated becomes abnormally early because of stratification of the temperature of the suppression pool, and that there is a possibility that the filtered venting system must be activated or overpressure failures of the containment vessel 3 might occur in the situation where the people in the surrounding area cannot evacuate completely yet. The present invention teaches a satisfactory solution for this problem.

### <Explanation of FP Heating>

If a situation is anticipated where a main steam line break accident (MSLBA) which is a break of the main steam pipe (MSL) 71 inside of the dry well 4 occurs and proceeds to a core melt accident later, a large amount of radioactive materials that are fission products generated from the molten core are released into the dry well 4 thorough the break of the main steam pipe. Most of the particulate radioactive materials fall out or plate out on a wall or a floor of the dry well 4 and become deposited. Gaseous radioactive materials and airborne radioactive materials are carried by steam and vented to the suppression pool 6 via LOCA vent pipes 8. It, however, becomes realized that the temperature of an atmosphere in the dry well 4 rises up to about 400 degrees Celsius due to the decay heat of the large amount of radioactive materials deposited on the wall and the floor of the dry well 4. There is an equipment hatch (not shown) in the dry well 4. If the temperature of the atmosphere in the dry well 4 is kept too high in the long term, there is a risk that a large amount of hydrogen and radioactive materials in the dry well 4 leak out by deterioration of a seal material of the hatch. The present invention teaches a satisfactory solution for this problem.

### <Explanation Relating to FIG. 21: a Second Conventional Nuclear Power Plant>

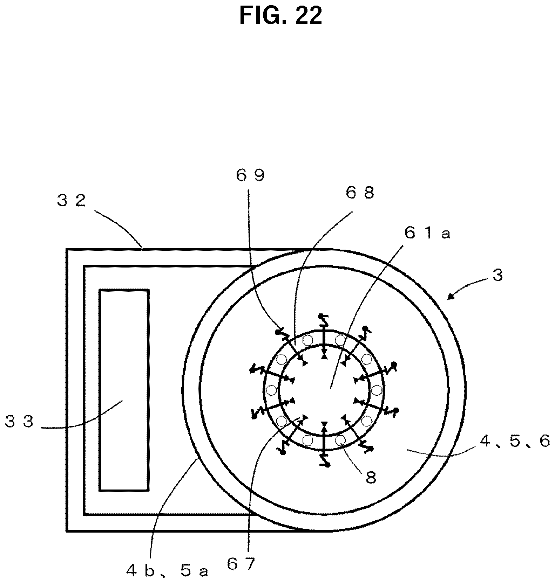

Explanation of a second conventional nuclear power plant will be described with reference to FIGS. 21 and 22.

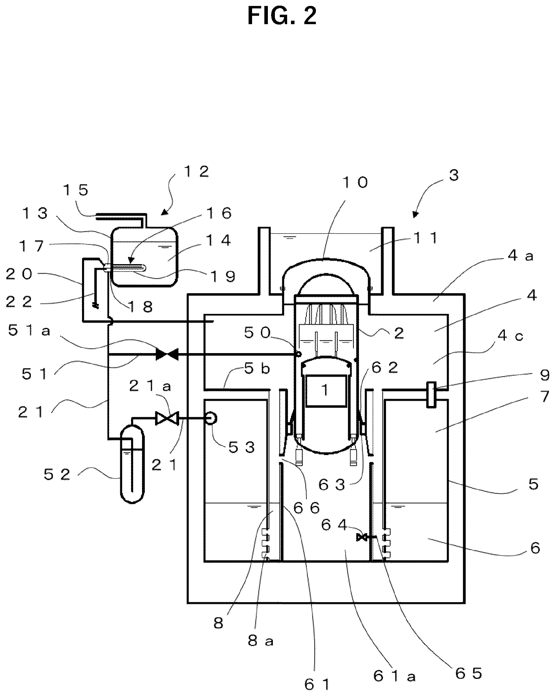

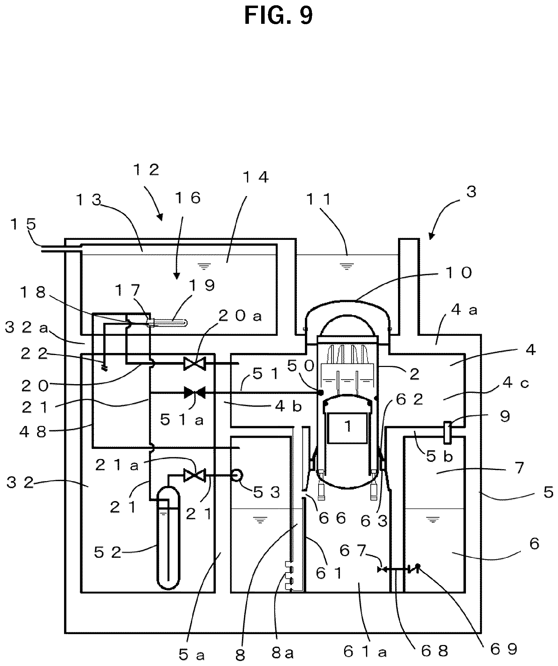

FIG. 21 is a sectional elevational view showing an example of a configuration around a containment vessel of the second conventional nuclear power plant. The present prior art is published in FIG. 9 and FIG. 2 of the patent document 1. In FIG. 21, a core 1 is contained in a reactor pressure vessel 2. The reactor pressure vessel 2 is contained in a containment vessel 3. The containment vessel 3 has a cylindrical shape (see FIG. 22). In FIG. 21 the configuration of the core 1, the reactor pressure vessel 2 and the containment vessel 3 is the same as that of the first conventional nuclear power plant shown in FIG. 15. In the following, in order to avoid duplication, the configuration of the second conventional nuclear power plant that is different from that of the first conventional nuclear power plant is described.

### <Explanation of an Outer Well>

Further, in the second conventional nuclear power plant, an outer well 32 is provided outside the dry well 4 and the wet well 5. This configuration is adopted in a Severe Accident Tolerant Reactor (SATOR). The outer well 32 adjoins the dry well 4 via a dry well common part wall 4b, and adjoins the wet well 5 via a wet well common part wall 5a. Aceiling part of the outer well 32 is a flat plate, which will be referred to as a top slab 32a of the outer well 32. The atmosphere in the outer well 32 is inerted by nitrogen and limited to a low oxygen concentration. The outer well 32 has pressure resistance and gastightness equivalent to those of the dry well 4 and the wet well 5.

The same materials as those of the containment vessel 3 may all be used for the outer well 32, such as reinforced concrete (RC), an SC composite, and steel. In the case of reinforced concrete, liners are laid on the inner surfaces in the same way as the containment vessel 3. As shown in FIG. 22, the outer well 32 according to the present prior art has a rectangular shape in a top plan view and is configured to surround a part of outer walls of the dry well 4 and the wet well 5. However, the plane shape of the outer well 32 is not limited thereto. The outer well 32 may have any shape as long as the outer well 32 adjoins and surrounds at least a part of the outer walls of the dry well 4 and the wet well 5. Examples may include a trapezoidal shape, a polygonal shape, a crescent shape, a partially circular shape, a fully circular shape and so on.

### <Explanation of a Scrubbing Pool>

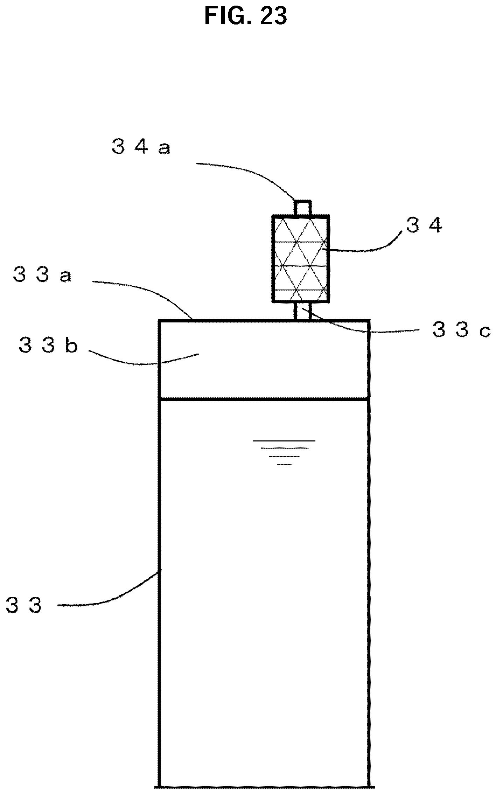

Explanation of a scrubbing pool will be described with reference to FIG. 23. A scrubbing pool 33 storing water inside is arranged in the outer well 32. A lid 33a covers the top of the scrubbing pool 33. A space 33b is formed between the lid 33a and the pool water. A first outlet pipe 33c opening to the space 33b is arranged on the top of the lid 33a. A metal fiber filter 34 is connected to and arranged on one end of the first outlet pipe 33c. The metal fiber filter 34 is further connected with a second outlet pipe 34a which opens to the interior of the outer well 32 at the other end.

The space 33b is needed if the water level rises as the gas in the dry well 4 is vented from a gas vent pipe 22. The lid 33a is needed to prevent the water from flowing out due to sloshing at the time of an earthquake in not only normal operation but also an accident. The scrubbing pool 33 according to the present prior art has a rectangular shape in a top plan view. However, the plane shape of the scrubbing pool 33 is not limited thereto. Examples may be any shape including a polygonal shape, an oval shape, a circular shape. Further, there is also an example of a tank which integrates the scrubbing pool 33, the lid 33a and the space 33b.

### <Explanation Relating to FIG. 21: a Passive Containment Cooling System (PCCS) of the Second Conventional Nuclear Power Plant>

Next, a configuration of a passive containment cooling system (PCCS) 12 of the second conventional nuclear power plant will be explained with reference to FIG. 21. A cooling water pool 13 is arranged above the containment vessel 3 and the outer well 32. The cooling water pool 13 stores cooling water 14 inside. The cooling water pool 13 may be of either a pool type or a tank type. FIG. 21 shows an example of a pool type. In the case of the pool type, the top of the cooling water pool 13 is covered with a lid.

An exhaust port 15 for releasing steam to the environment is arranged on the gas phase in the upper part of the cooling water pool 13. An insect screen may be arranged on an outlet of the exhaust port 15. The cooling water pool 13 is usually located above the containment vessel 3 and the outer well 32. The cooling water pool 13, however, may be arranged beside the containment vessel 3 and the outer well 32.

A heat exchanger 16 is installed in the cooling water pool 13 to be submerged at least in part in the cooling water 14. It is shown that the heat exchanger 16 is arranged to be submerged completely in the cooling water 14 as an example for the present prior art.

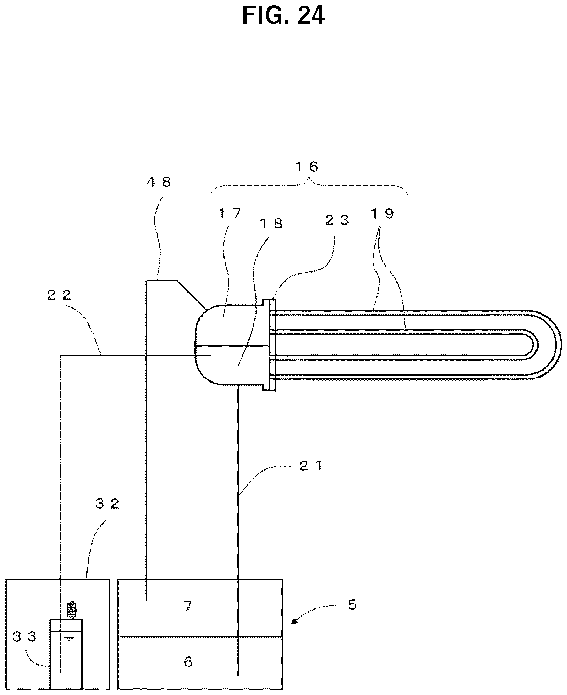

A plurality of the heat exchangers 16 may often be installed, although FIG. 21 shows only one heat exchanger 16. The heat exchanger 16 includes an inlet plenum 17, an outlet plenum 18, and heat exchanger tubes 19 (See FIG. 24). The heat exchangers 16 in total at least have a cooling capacity for condensing steam equivalent to decay heat.

FIG. 21 shows an example in which the entire heat exchanger 16, including the inlet plenum 17 and the outlet plenum 18, is installed inside the cooling water pool 13. However, the configuration is not limited to this example. For example, only the heat exchanger tubes 19 are installed inside the cooling water pool 13, and the inlet plenum 17 and the outlet plenum 18 protrude out of the cooling water pool 13

A wet well gas supply pipe 48 is connected to the inlet plenum 17 of the heat exchanger 16. The wet well gas supply pipe 48 has one end opened in the wet well gas phase 7, penetrates a side wall (outer wall) of the wet well 5, passes inside the outer well 32, penetrates the top slab 32a of the outer well 32, and has the other end connected to the inlet plenum 17. In the example of the present prior art, a dry well gas supply pipe 20 is further arranged. The dry well gas supply pipe 20 has one end opened in the dry well 4, penetrates a side wall (outer wall) of the dry well 4, passes inside the outer well 32, penetrates the top slab 32a of the outer well 32, and has the other end connected to the wet well gas supply pipe 48. An isolation valve 20a is arranged on the dry well gas supply pipe 20 and closed during normal operation.

Further, a condensate return pipe 21 is connected to the lower part of the outlet plenum 18. The condensate return pipe 21 penetrates the top slab 32a of the outer well 32, passes inside the outer well 32, and has a tip submerged in the suppression pool 6 in the wet well 5. Since the condensate return pipe 21 is arranged to pass inside the outer well 32, it is configured that radioactive materials such as CsI are not released directly into the environment even if condensate leakage occurs.

Although plenty of particulate radioactive materials such as CsI are included in the atmosphere in the containment vessel 3 in a core melt accident, most of the particulate radioactive materials are transferred into the condensate when steam condenses in the heat exchanger 16. Since the condensate including the plenty of CsI is returned into the pool water in the suppression pool 6 by the condensate return pipe 21 and held therein, the passive containment cooling system 12 of the present prior art is configured to remove passively the airborne particulate radioactive materials in the containment vessel 3.

Therefore, even if a core melt accident occurs by a station blackout (SBO), the present prior art has an equivalent effect as if an active containment spray washes out particulate radioactive materials and returns them into the pool water in the suppression pool 6. Further, as the condensate return pipe 21 is not arranged into the LOCA vent pipe 8 in the present prior art, it is configured not to increase pressure drop in the LOCA vent pipe 8 in a LOCA.

Further, a gas vent pipe 22 is connected to the upper part of the outlet plenum 18. The gas vent pipe 22 penetrates the top slab 32a of the outer well 32, passes inside the outer well 32, and has a tip arranged being submerged in the scrubbing pool 33. As the gas vent pipe 22 is arranged as such passing inside the outer well 32, it is configured that radioactive materials such as noble gases, organic iodine, and CsI are not released directly to the environment even if gases leak out. Moreover, it is configured that particulate radioactive materials such as CsI are scrubbed in the pool water of the scrubbing pool 33. Furthermore, it is configured that those carried over by water droplet are removed by the metal fiber filter 34.

Owing to this, it became possible to eliminate the necessity of long-term relocation of the surrounding population by land contamination due to release of particulate radioactive materials such as CsI. Radioactive noble gases and organic iodine are released to the outer well 32 through the second outlet pipe 34a and also held up inside the outer well 32. Owing to this, it became possible to eliminate the necessity of emergency evacuation of surrounding population beforehand or iodine prophylaxis. On the contrary, those emergency responses are necessary for the conventional filtered venting system because it releases radioactive noble gases and organic iodine directly to the environment when activated.

Furthermore, in the present prior art, a large amount of hydrogen generated by metal-water reaction of fuel cladding in a severe accident is also released into the outer well 32 by the gas vent pipe 22. Therefore, it is possible to keep the pressure of the dry well 4 and the wet well 5 sufficiently low in a severe accident. As the atmosphere in the outer well 32 is inerted by nitrogen, no detonation occurs even if a large amount of hydrogen is contained therein.

Further, in the present prior art, the steam generated in the wet well gas phase 7 is sucked by the wet well gas supply pipe 48 and can be cooled by the passive containment cooling system 12. Therefore, it is possible to maintain the pressure in the containment vessel 3 low and prevent overpressure failures even if stratification of the temperature of the suppression pool 6 occurs and generates high-pressure steam. This is possible because the noncondensable gases in the containment vessel 3 can be sucked by the wet well gas vent pipe 48, vented into the scrabbing pool 33 by the gas vent pipe 22 and further vented into the outer well 32. On the contrary, in the case of the conventional passive containment cooling system 12 (See FIG. 15 and FIG. 20) of the first conventional nuclear power plant (ABWR) where the gas vent pipe 22 is led to the suppression pool 6, even if a wet well gas supply pipe 48 is installed, the gas vent pipe 22 cannot vent gases into the wet well 5 and causes stagnation of the noncondensable gases from the wet well gas phase 7 in the heat exchanger 16 resulting in loss of function of the passive containment cooling system 12. In the case of the passive containment cooling system 12 (See FIG. 21 and FIG. 24) of the second conventional nuclear power plant (STOR), as the outer well 32 is provided for the venting destination of the gas vent pipe 22, stagnation of noncondensable gases in the heat exchanger 16 does not occur. Therefore, it can cool the high-pressure steam from the wet well gas phase 7 by the wet well gas supply pipe 48 and prevent overpressure failures of the containment vessel 3. Because there is always a pressure difference between the wet well gas phase 7 and the outer well 32, the noncondensable gases in the heat exchanger 16 are efficiently vented into the outer well 32 by the gas vent pipe 22. Therefore, in the case of the passive containment cooling system 12 of the second conventional nuclear power plant, it is not necessary to install a vent fan on the gas vent pipe 22.

### <Explanation Relating to FIG. 21: a Flooder Pipe)>

In the present prior art, a flooder pipe 68 for flooding the lower dry well is provided through the wall of the pedestal 61. The flooder pipe 68 is led into the lower dry well (pedestal cavity) 6la at one end, and opens in the suppression pool 6 at the other end. A flooder valve 67 is arranged on a part of the flooder pipe 68 inside the lower dry well 6la. A check valve 69 is also arranged on the flooder pipe 68. The check valve 69 can prevent high-temperature water in the lower dry well 61a from flowing back to the suppression pool 6, even if the pressure in the dry well 4 increases. A total of ten flooder pipes 68 are installed not to overlap with the LOCA vent pipes 8, for example, in intermediate positions between the LOCA vent pipes (See FIG. 22).

The flooder valves 67 may be fusible valves. Fusible valves melt and open by heat of debris. Besides fusible valves, however, any valves that do not need AC power source for operation in an SBO can be used. For example, squib valves which use an explosive for operation may be employed. For activation of the squib valves, high-temperature signal that detects heat of debris is used. Spring valves which use spring force for operation may also be employed. The spring valves are opened by melting of wires holding springs by heat of debris. For further improvement of reliability, for example, five of the ten flooder valves may be the squib valves and the other five may be the spring valves. For another example, five may be the fusible valves and the other five may be the squib valves. Otherwise, at least two or more types among fusible, squib, and spring valves may be used in combination.

### <Explanation Relating to FIG. 24: a Heat Exchanger of the PCCS of the Second Conventional Nuclear Power Plant)>

FIG. 24 is an elevational cross-sectional view of a heat exchanger of the passive containment cooling system of the second conventional nuclear power plant. With reference to FIG. 24, a structure of the heat exchanger 16 of the passive containment cooling system 12 of the second conventional nuclear power plant will be described using an example of a horizontal heat exchanger.

As shown in FIG. 24, the outlet plenum 18 is arranged below the inlet plenum 17. Many U-shaped heat exchanger tubes 19 are connected to a tube plate 23. Straight parts of the heat exchanger tubes 19 extend horizontally. In FIG. 24, only two heat exchanger tubes are illustrated for simplicity. The cooling water 14 (See FIG. 21) is filled outside the heat exchanger tubes 19. The inlets of the heat exchanger tubes 19 are open to the inlet plenum 17. The outlets of the heat exchanger tubes 19 are open to the outlet plenum 18.

The wet well gas supply pipe 48 is connected to the inlet plenum 17, through which mixture gases of nitrogen, hydrogen, oxygen, steam and so on in the wet well gas phase 7 is supplied to the inlet plenum 17. The mixture gases are led into the heat exchanger tubes 19. The steam is condensed into condensate. The condensate flows out to the outlet plenum 18 via the outlets of the heat exchanger tubes 19 and accumulate in the lower part of the outlet plenum 18.

The condensate return pipe 21 is connected to the lower part of the outlet plenum 18. The condensate in the outlet plenum 18 returns into the suppression pool 6 by gravity via the condensate return pipe 21. The gas vent pipe 22 is connected to the upper part of the outlet plenum 18. Noncondensable gases such as nitrogen, hydrogen and oxygen that have not condensed in the heat exchanger tubes 19 are exhausted from the heat exchanger tubes 19 and accumulate in the upper part of the outlet plenum 18.

The tip of the gas vent pipe 22 is led into the scrubbing pool 33 in the outer well 32 and submerged in the pool water. The noncondensable gases in the outlet plenum 18 flow through the gas vent pipe 22, push the pool water in the scrubbing pool 33 downward, are vented into the pool water, and then transfer to the space 33b between the lid 33a and the pool water (See FIG. 23). Then, the noncondensable gases transfer to the inside of the outer well 32 through the first outlet pipe 33c, the metal fiber filter 34 and the second outlet pipe 34a (See FIG. 23).

The shape of the heat exchanger tubes 19 is not limited to U-shaped type. There is also a vertical type heat exchanger structure that installs the heat exchanger tubes 19 having vertically straight tube portions (See FIG. 25). The inlet plenum 17 is always positioned above the outlet plenum 18. Thus, the condensate condensed in the heat exchanger tubes 19 is led into the outlet plenum 18 by gravity. The advantages of the horizontal type are good seismic performance and effective utilization of the cooling water 14. On the contrary, the advantage of the vertical type is good drain capability of the condensate.

### <Explanation Relating to FIG. 25: a PCCS of a Third Conventional Nuclear Power Plant>

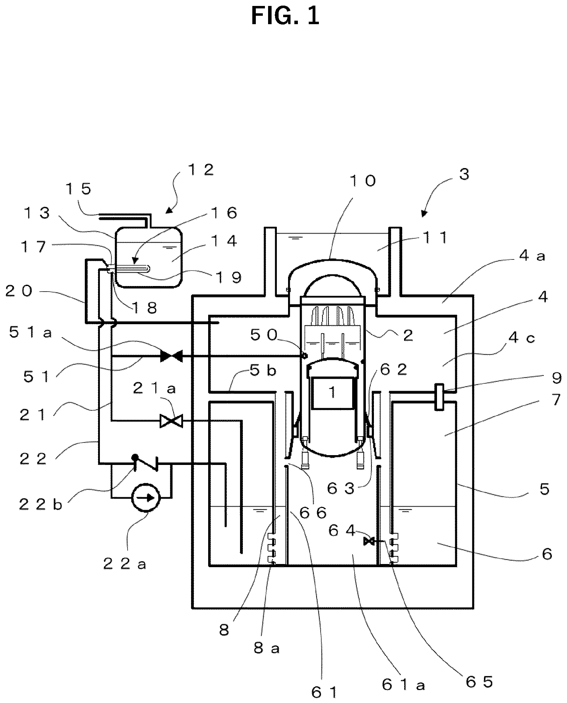

With reference to FIG. 25, a configuration of a PCCS of a third conventional nuclear power plant will be explained. In the third conventional nuclear power plant, a gravity driven core cooling system (GDCS) pool 28 is arranged in an upper dry well 4c. The height between a top slab 4a and the top of a diaphragm floor 5b is about 6 m. The inner diameter of the containment vessel 3 is about 36 m. This configuration is adopted in the ESBWR (See FIG. 1 of Patent Document 2).

A cooling water pool 13 is arranged above a containment vessel 3. The cooling water pool 13 stores cooling water 14 inside. The cooling water pool 13 is a pool type. A heat exchanger 16 is installed in the cooling water pool 13. The heat exchanger 16 is a vertical type. The heat exchanger 16 is installed fully submerged in the cooling water 14 during normal operation.

The heat exchanger 16 has an inlet plenum 17, an outlet plenum 18 and an assembly of heat exchanger tubes 19. The heat exchanger tubes 19 are a vertical type where straight tube portions are installed vertically. There are pairs of the inlet plenums 17, the outlet plenums 18 and assemblies of the heat exchanger tubes 19 constituting one the heat exchanger 16. Although plurality of the heat exchangers 16 may often be arranged, only one is shown in FIG. 25. The heat exchangers 16 in total have at least cooling capacity to condense steam equivalent to decay heat.

A dry well gas supply pipe 20 is connected to the inlet plenum 17. The dry well gas supply pipe20 is consist of two pipes which are connected to each of the two inlet plenums 17 and combined into a one pipe at a middle position. The combined dry well gas supply pipe 20 then penetrates the top slab 4a and is open to the upper dry well 4c. The dry well gas supply pipe 20 has no isolation valve and is open to the upper dry well 4c all the time.

A condensate return pipe 21 is connected to the lower part of the outlet plenum 18. The condensate return pipe 21 consists of a pair of pipes connected to a pair of the outlet plenums 18. Each penetrates the top slab 4a and then combines into one pipe which is connected to a PCCS drain tank 24.

The PCCS drain tank 24 is arranged on the diaphragm floor 5b. The PCCS drain tank 24 contains gases of the same constituent (mainly nitrogen) as in the upper dry well 4c but does not store water. Further, an anti-debris lid 25 is installed on an upper part of the PCCS drain tank. The purpose of the anti-debris lid 25 is to prevent as much as possible debris of scattered insulators and the like in a loss of coolant accident from getting into the PCCS drain tank 24.

A RPV injection pipe 26 is connected to the lower part of the PCCS drain tank 24. The RPV injection pipe 26 goes down below the diaphragm floor 5b. The other end of the RPV injection pipe 26 is connected to the RPV 2 in a lower region (See FIG. 18). A RPV injection pipe isolation valve 27 is installed on the RPV injection pipe 26. The RPV injection pipe isolation valve 27 is closed during normal operation. The RPV injection pipe isolation valve 27 is opened by a signal of low core water level if the core water level goes down after a loss of coolant accident occurs. Therefore, the RPV injection pipe isolation valve 27 does not open immediately even if a loss of coolant accident occurs. Thers is a time delay for the RPV injection pipe isolation valve 27 to open until a signal of low core water level is activated. On the contrary, when a loss of coolant accident occurs, almost at the same time, a large amount of steam is generated from a break flow and flows into the PCCS heat exchanger 16 via the dry well gas supply pipe 20. Then a large amount of condensate accumulates in the outlet plenum 18. If the condensate is not drained the PCCS will lose its safety function. In order to avoid this, the PCCS drain tank 24 is necessary. If there is no PCCS drain tank 24, the condensate cannot be drained and accumulate inside the PCCS heat exchanger 16. Then the PCCS heat exchanger 16 cannot intake the steam in the upper dry well 4c and will lose its safety function.

There is a gap between the anti-debris lid 25 and the PCCS drain tank 24 in order that the anti-debris lid 25 does not seal the PCCS drain tank 24. This gap is necessary to vent gasses in the PCCS drain tank 24 when the condensate flows into the PCCS drain tank 24 via the condensate return pipe 21, as a large amount of steam generated in the upper dry well 4c in a loss of coolant accident is condensed in the PCCS heat exchanger 16 and generates the condensate. If there is no gap and the PCCS tank 24 is sealed, flow of the condensate into the drain tank 24 is obstructed. The gases in the PCCS drain tank 24 have no way to go out, flow backward in the condensate return pipe21, move into the PCCS heat exchanger 16 and obstruct steam condensation function of the PCCS heat exchanger 16. In order to avoid this, a certain gap is necessary between the anti-debris lid 25 and the PCCS drain tank 24 in order that the anti-debris lid 25 does not seal the PCCS drain tank 24. Moreover, the gap is also necessary because the RPV injection pipe isolation valve 27 is closed immediately after a loss of coolant accident until the signal of low core water level is activated. Because a certain gap is arranged between the anti-debris lid 25 and the PCCS drain tank 24, the surface of the condensate that has drained into the PCCS drain tank 24 is pressurized by the pressure in the upper dry well 4c through the gap. Further, if the amount of the condensate in the PCCS drain tank 24 increases and the water level in the PCCS drain tank 24 also increases, the condensate flows out into the upper dry well 4c through the gap. As a result, the condensate in the PCCS drain tank 24 cannot rise over the level of the gap.

As the water level in the PCCS drain tank 24 is limited to the level of the gap, water head is limited to about 3 m. It is difficult to inject the water in the PCCS drain tank 24 to the RPV 2 by only 3 m water head pressure against the pressure in the RPV 2. In this situation, it is necessary to connect the RPV injection pipe to the RPV 2 at sufficiently low position by leading down the RPV injection pipe 26 below the diaphragm floor 5b to the lower region 90 (See FIG. 18). In order to lead down the RPV injection pipe 26 below the diaphragm floor 5b, it is necessary to secure a piping space 29 significantly between the LOCA vent pipes 8 and the RPV 2. Therefore, the outer diameter of the containment vessel 3 must be increased. Moreover, as the inner diameter of the pedestal 61 also must be increased, it is necessary to install a RPV support 63 which has a very unique structure. The RPV support 63 has to protrude largely from the wall of the pedestal and has a structure that is difficult to ensure seismic strength. A RPV injection pipe (not shown) of GDCS pool 28 similarly also needs to go down into the piping space 29 to inject water to the RPV 2. Therefore, the piping space 29 is essential to the ESBWR which uses the GDCS pool 28. This is an unavoidable problem of the ESBWR in which the GDCS pool 28 injects water in the upper dry well 4c into the RPV 2 arranged also in the upper dry well 4c at almost the same elevation, only by gravity caused by the small difference in elevations. This is one of problems of the ESBWR.

Furthermore, as the GDCS pool 28 is arranged in the upper dry well 4c, there is no more enough space for the PCCS drain tank 24 to be arranged in the upper dry well 4c. Thus, the PCCS drain tank 24 blocks an inlet of the LOCA vent pipe 8. The condensate return pipe 21 on the left side also interferes with the GDCS pool 28. Therefore, in the final design of the ESBWR, a configuration was adopted where the PCCS drain tank 24 was eliminated and the condensate return pipe 21 is led into the GDCS pool 28. Accordingly, the RPV injection pipe 26 and the RPV injection pipe isolation valve 27 were eliminated.

In this way, if you try to inject condensate from the PCCS heat exchanger 16 to the RPV 2 by the condensate return pipe 21, it is necessary to install the PCCS drain tank 24 in the narrow upper dry well 4c, further, provide the piping space 29 so that the RPV injection pipe 26 can go down sufficiently below the diaphragm 5b into the lower region 90 (See FIG.18), enlarge the inner diameter of the containment vessel 3, and install the RPV support 63 that has a verry specialized structure.

### PRIOR ART DOCUMENTS

### Patent Documents

Patent Document 1: Japanese Patent Application Laid-Open Publication No. 2016-14640 (US 2017/0162281 A1)
Patent Document 2: Japanese Patent Application Laid-Open Publication No. 2004-333357 (JP2004-333357A)
Patent Document 3: Japanese Patent Application Laid-Open Publication No. 2007-232529 (JP2007-232529A)
Patent Document 4: Japanese Patent Application Laid-Open Publication No. 2008-139023 (JP2008-139023A)

### SUMMARY OF THE INVENTION

### Problems to be Solved by the Invention

Problems to be solved are that the passive containment cooling system 12 of the conventional nuclear power plants cannot cool the residual debris in the reactor pressure vessel 2 in a severe accident and prevent a large amount of hydrogen and radioactive materials from leaking out of the containment vessel 3 due to deterioration of the seal material of the flange 74 caused by heating up of the top head section 10a of the containment vessel 3. Moreover, the passive containment cooling system 12 of the conventional nuclear power plants cannot prevent overheat failures of the containment vessel 3 due to heating up of the upper dry well 4c. Furthermore, in a BWR up to the ABWR, the passive containment cooling system 12 of the conventional nuclear power plants cannot prevent early overpressure failures of the containment vessel 3 due to stratification of the temperature in the suppression pool and the high-pressure steam generated from the water near the surface.

### Means for Solving the Problems

The most main feature of the present invention is that the present invention is configured to return condensate in a passive containment cooling system 12 not only to a lower region 90 but also to an upper region 91, inject the condensate into a reactor pressure vessel 2 in a severe accident to cool a residual debris in the reactor pressure vessel 2, and prevent not only heating up of a top head section 10a of a containment vessel 3 and deterioration of a sealing material of a flange 74 but also overheat failures of the containment vessel 3. In addition, the present invention is featured to prevent early overpressure failures of the containment vessel 3 due to stratification of the temperature in a suppression pool and high-pressure steam generated from the water near a surface.

### Advantage of the Invention

According to an embodiment of the present invention, even if a severe accident accompanied by a core meltdown occurs due to a station blackout (SBO) and the like, overheat failures of a containment vessel 3 can be prevented. Early overpressure failures of the containment vessel 3 also can be prevented. The lessons learned of Fukushima Daiichi accident taught phenomena that can really lead to containment failures in a severe accident. According to an embodiment of the present invention, it is possible to control such phenomena and maintain integrity of the containment vessel.

### BRIEF DESCRIPTION OF THE DRAWINGS

FIG. 1 is a sectional elevational view showing a configuration around a containment vessel of a nuclear plant according to a first embodiment of the present invention.
FIG. 2 is a sectional elevational view showing a configuration around a containment vessel of a nuclear plant according to a second embodiment of the present invention.
FIG. 3 is a sectional elevational view showing a configuration around a containment vessel of a nuclear plant according to a third embodiment of the present invention.
FIG. 4 is a sectional elevational view showing a configuration around a containment vessel of a nuclear plant according to a fourth embodiment of the present invention.
FIG. 5 is a sectional elevational view showing a configuration around a containment vessel of a nuclear plant according to a fifth embodiment of the present invention.
FIG. 6 is a sectional elevational view showing a configuration around a containment vessel of a nuclear plant according to a sixth embodiment of the present invention.
FIG. 7 is a sectional elevational view showing a configuration around a containment vessel of a nuclear plant according to a seventh embodiment of the present invention.
FIG. 8 is a sectional elevational view showing a configuration around a containment vessel of a nuclear plant according to an eighth embodiment of the present invention.
FIG. 9 is a sectional elevational view showing a configuration around a containment vessel of a nuclear plant according to a nineth embodiment of the present invention.
FIG. 10 is a sectional elevational view showing a configuration around a containment vessel of a nuclear plant according to a tenth embodiment of the present invention.
FIG. 11 is a sectional elevational view showing a configuration around a containment vessel of a nuclear plant according to an eleventh embodiment of the present invention.
FIG. 12 is a sectional elevational view showing a configuration around a containment vessel of a nuclear plant according to a twelfth embodiment of the present invention.
FIG. 13 is a sectional elevational view showing a configuration around a containment vessel of a nuclear plant according to a thirteenth embodiment of the present invention.
FIG. 14 is a sectional elevational view showing a configuration around a containment vessel of a nuclear plant according to a fourteenth embodiment of the present invention.
FIG. 15 is a sectional elevational view showing a configuration around a containment vessel of a first conventional nuclear power plant (ABWR).
FIG. 16 is a plan view showing the configuration around the containment vessel of the first conventional nuclear power plant (ABWR).
FIG. 17 is a sectional elevational view showing a configuration around a top head section of the containment vessel of the first conventional nuclear power plant (ABWR).
FIG. 18 is a sectional elevational view showing internal regions of the containment vessel of the first conventional nuclear power plant (ABWR).
FIG. 19 is a sectional elevational view showing a reactor pressure vessel and core internals of the first conventional nuclear power plant (ABWR).
FIG. 20 is a sectional elevational view showing an example of a configuration of a passive containment cooling system of the first conventional nuclear power plant (ABWR).
FIG. 21 is a sectional elevational view showing a configuration around a containment vessel of a second conventional nuclear power plant (SATOR).
FIG. 22 is a plan view showing the configuration around the containment vessel of the second conventional nuclear power plant (SATOR).
FIG. 23 is a sectional elevational view showing a configuration of a scrubbing pool of the second conventional nuclear power plant (SATOR).
FIG. 24 is a sectional elevational view showing an example of a configuration of a passive containment cooling system of the second conventional nuclear power plant (SATOR).
FIG. 25 is a sectional elevational view showing an example of a configuration of a passive containment cooling system of a third conventional nuclear power plant (ESBWR).
FIG. 26 is a sectional elevational view showing a common configuration around a containment vessel of a nuclear plant according to embodiments of the present invention.

### EMBODIMENTS OF THE INVENTION

A nuclear plant having a passive containment cooling system according to embodiments of the present invention will be described below with reference to FIGS. 1 to 14. The same or similar parts as/to those of the prior art, and the same or similar parts between the following embodiments, will be designated by the same reference numerals. Redundant descriptions will be omitted, and only essential parts will be described.

### <Explanation of Embodiments based on the ABWR>

Embodiments based on the ABWR are described below with reference to FIGS. 1 to 7. As for embodiments 1 to 7 to be described below, a configuration of a core 1, a reactor pressure vessel 2, and a containment vessel 3 is the same as that of the first conventional nuclear power plant (ABWR). Further, a basic configuration of a passive containment cooling system 12 is the same as the basic configuration of the passive containment cooling system 12 of the first conventional nuclear power plant (ABWR). In the following description, redundant descriptions will be omitted, and only different parts of embodiments 1 to 7 from the ABWR will be described.

Though a containment vessel called RCCV is adopted in the embodiments shown in FIGS. 1 to 7, a type of a containment vessel is not limited thereto. Any pressure suppression type containment vessel that has a pressure suppression function by a suppression pool is universally applicable. As for materials, other materials such as SC composite, steel and the like also can be used.

### First Embodiment

FIG. 1 is a sectional elevational view showing a configuration around a containment vessel of a nuclear plant according to a first embodiment of the present invention. Points where the first embodiment is different from the conventional ABWR are described below.

### <Explanation Relating to FIG. 1: a Configuration of a Passive Containment Cooling System of the First Embodiment>

With reference to FIG. 1, a configuration of a passive containment cooling system 12 of the first embodiment will be described. In the first embodiment, one end of a condensate return pipe 21 is as an example installed to be submerged in water of a suppression pool 6. A condensate return pipe isolation valve 21a is installed on the condensate return pipe 21. The condensate return pipe isolation valve 21a is opened during normal operation. Although in the present embodiment, one end of the condensate return pipe 21 is as an example led into the suppression pool 6, a configuration is not limited to this example. There are other examples where one end of the condensate return pipe 21 is led to a core catcher (not shown) in a lower part of a lower dry well 61a or into a LOCA vent pipe 8. In the cases where one end of the condensate return pipe is led into the suppression pool 6 or the LOCA vent pipe 8, the condensate is also eventually returned to the core catcher (not shown) in the lower part of the lower dry well 61a via fusible valves 64. In this way, one end of the condensate return pipe 21 is anyway configured to return condensate to a lower region 90 (See FIG. 18) which is below a diaphragm floor 5b in a containment vessel 3.

Further, in the present embodiment, a reactor pressure vessel injection pipe 51 is installed. One end of the reactor pressure vessel injection pipe 51 is connected to a part of the condensate return pipe 21 between an outlet plenum 18 and the condensate return pipe isolation valve 21a. The other end of the reactor pressure vessel injection pipe 51 is connected to a reactor pressure vessel 2. In the present embodiment, an example where the other end of the reactor pressure vessel injection pipe 51 is connected to a feedwater sparger 50 in the reactor pressure vessel 2 is shown. However, a configuration is not limited to this example. For example, the other end of the reactor pressure vessel injection pipe 51 may be connected to a sparger 46 of a low-pressure flooder system (See FIG. 19). A reactor pressure vessel injection pipe isolation valve 51a is installed on the reactor pressure vessel injection pipe 51. The reactor pressure vessel injection pipe isolation valve 51a is closed during normal operation.

Further, a gas vent fan 22a and a backflow prevention valve 22b are installed on a gas vent pipe 21. FIG. 1 shows an example where the gas vent fan 22a is installed using a branch pipe branching from the gas vent pipe 22. However, a configuration is not limited to this example. The gas vent fan 22a may be installed on the gas vent pipe 22 directly. In this case, the backflow prevention valve 22b does not need to be installed. FIG. 1 also shows an example where the backflow prevention valve 22b is a check valve. However, a configuration is not limited to this example. A motor operated valve and the like may be used as a backflow prevention valve 22b. For operation of the gas vent fan 22a and the motor operated valve, a power source (not shown) dedicated to a severe accident is used. The power source dedicated to a severe accident is a gas turbine generator, a battery and the like which are diverse and different from an emergency power (a diesel generator) for the design basis accident.

The first feature of the present embodiment is that the condensate return pipe 21 is led into the suppression pool 6 and that the reactor pressure vessel injection pipe 51 is installed to branch from the middle of the condensate return pipe 21. Action of the present embodiment configured in this way will be described. If a loss of coolant accident occurs, a large amount of steam is generated in the upper dry well 4c from a break flow. The steam flows into a heat exchanger 16 of the passive containment cooling system 12 via a dry well gas supply pipe 20 by its own pressure and be cooled by heat exchanger tube 19 and becomes condensate. The condensate flows into the outlet plenum 18. Further, the condensate is returned to the suppression pool 6 via the condensate return pipe 21. Therefore, the passive containment cooling system 12 is prevented from losing its function due to stagnation of condensate in the heat exchanger 16. In this way, as the suppression pool 6 can function as a PCCS drain tank, it is not necessary to install a PCCS drain tank 24 in the narrow upper dry well 4c like the ESBWR (See FIG. 25). In this way, an operation method of the passive containment cooling system 12 is called a suppression pool drain mode in which one end of the condensate return pipe 21 is submerged in the suppression pool 6, the condensate return pipe isolation valve 21a is opened, and the reactor pressure vessel injection pipe isolation valve 51a is closed.

On the contrary, if a core melt accident occurs due to an SBO and the like, a core debris melts through the bottom of the reactor pressure vessel 2 and drops on a floor of the lower dry well 61a. As the temperature in the lower dry well 61a rises due to heat of the debris, the fusible valves 64 open. Then water in the LOCA vent pipes 8 flows into the lower dry well 61a and floods the debris. The debris heats up the water in the lower dry well 61a and generates a large amount of steam. The steam moves to the upper dry well 4c via openings 66 in the lower dry well 61a and goes into the heat exchanger 16 of the passive containment cooling system 12 via the dry well gas supply pipe 20 by its own pressure. The steam is cooled by the heat exchanger tube 19 and becomes condensate. The condensate flows into the outlet plenum 18. Further, the condensate is returned to the suppression pool 6 via the condensate return pipe 21. The water in the suppression pool 6, by way of the LOCA vent pipes 8 and through the fusible valves 64, flows into the lower dry well 61a and is used for cooling the debris which has dropped on the floor of the lower dry well 61a. In this way, cooling of the debris which has dropped into the lower dry well 61a can be performed by the passive containment cooling system 12 perfectly.

However, from the results of the Fukushima Daiichi accident, it becomes recognized that about 20 % of core debris remains in the reactor pressure vessel 2 in a severe accident. This in-core residual debris is not flooded. If this situation is left alone, the temperature in the reactor pressure vessel 2 goes up to about 1000 degrees Celsius. Due to heat release from the reactor pressure vessel 2, the temperature in the upper dry well 4c exceeds 200 degrees Celsius and the temperature in a top head section 10a of the containment vessel 3 exceeds 300 degrees Celsius. Overheat failures of the containment vessel 3 must happen. As the bottom of the reactor pressure vessel 2 is broken, the reactor pressure vessel 2 is depressurized close to the pressure in the dry well 4. In this situation, signals such as low-pressure of a reactor pressure vessel and high radiation level in a containment vessel are detected. After confirming these signals, the condensate return pipe isolation valve 21a is closed and the reactor pressure vessel injection pipe isolation valve 51a is opened. These switching of the isolation valves may be conducted either manually or automatically by signals. After these switching of the isolation valves is completed, the condensate in the outlet plenum 18 is sparged into the reactor pressure vessel 2 from the feedwater sparger 50 in the reactor pressure vessel 2 through the reactor pressure vessel injection pipe 51. Because there is about 10 m level difference between the outlet plenum 18 and the feedwater sparger 50, the water in the outlet plenum 18 can flows into the depressurized reactor pressure vessel 2 by gravity of water head of about 10 m. In this way, an operation method of the passive containment cooling system 12 is called a reactor pressure vessel injection mode in which the condensate return pipe isolation valve 21a is closed and the reactor pressure vessel injection pipe isolation valve 51a is opened to inject the condensate into the reactor pressure vessel 2. Once the condensate is injected into the reactor pressure vessel 2 from the feedwater sparger 50, the temperature in the reactor pressure vessel 2 decreases below about 600 degrees Celsius. The condensate injected from the feedwater sparger 50 goes down in a downcomer 2d (See FIG.19) and, through diffusers 42 of reactor internal pumps 40, flows into a lower plenum 2f which is a bottom portion of the reactor pressure vessel 2. If the location of melt through of the reactor pressure vessel 2 is an instrument pipe (not shown) and the like, the break location may be higher than a bottom head 2g of the reactor pressure vessel 2. In this case, the condensate accumulates up to the break location and forms a water level in a lower plenum 2f. The condensate accumulated in the lower plenum 2f drops down to the lower part of the lower dry well 61a through the melt thorough location of the reactor pressure vessel 2 and is used for cooling of the debris which has dropped on the floor of the lower dry well 61a. If this sparging of the condensate is not conducted, the temperature in the reactor pressure vessel 2 keeps high temperature of about 1000 degrees Celsius. There has been a risk that due to heat release from the heated-up reactor pressure vessel 2, during 7 days into a severe accident, the temperature in the upper dry well 4c keeps over 200 degrees Celsius and the temperature in the top head section 10a of the containment vessel keeps over 300 degrees Celsius. Because of this, there has been a risk of overheat failures of the upper dry well 4c and deterioration of a seal material of a flange 74 of a top head 10 of the containment vessel causing releases of a large amount of hydrogen and radioactive materials to an operating floor. It has been demonstrated by the evidence of the Fukushima Daiichi accident that a detonation of a large amount of hydrogen released from the containment vessel actually happened. However, in the present embodiment, the condensate is sparged into the reactor pressure vessel 2 from the feedwater sparger 50 and the temperature in the reactor pressure vessel 2 is kept below about 600 degrees Celsius during 7 days into a severe accident. Therefore, the temperature in the upper dry well 4c is kept below about 170 degrees Celsius and the temperature in the top head section 10a of the containment vessel is kept below about 200 degrees Celsius. Because of this, an overheat failure of the upper dry well 4c is prevented. The integrity of the seal material of the flange 74 of the top head 10 of the containment vessel can be also maintained. Thus, releases of a large amount of hydrogen and radioactive materials from the flange 74 is prevented. In this way, the reactor pressure vessel injection mode of the passive containment cooling system 12 is extremely effective for prevention of overheat failures of the containment vessel 3.

The present embodiment configured in this way can meet the requirement of the Japanese Nuclear Regulation Authority (NRA). It requires, in the Requirement Details of the Article 42 of the New Regulatory Requirements, that cooling function of molten core in the reactor shall be prepared (Example: equipment for injecting low-pressure water inside the reactor). The present embodiment can meet constituent elements of the requirement. Moreover, the present embodiment can meet the requirement by means of the passive containment cooling system 12 which does not use any pumps, power sources and the like. An isolation condenser (IC) can also meet the requirement. However, because an isolation condenser is a prevention system for a core melt, it is not allowed to be used after a core melt occurs based on defense in depth. If an isolation condenser is functioning, a core melt deos not happen. If a core melt accident happens it means that an isolation condenser must be failed for some reason and cannot be used. This actually happened in the Fukushima Daiichi accident. Therefore, after a core melt accident happens an isolation condenser cannot cool the molten core in the reactor pressure vessel. Also, in the case of the Fukushima Daiichi accident, the isolation condenser did not function at all after the core melt happened.

The second feature of the present embodiment is that the gas vent fan 22a is installed on the gas vent pipe 22. In the case of the present embodiment, the gas vent pipe 22 is led into the suppression pool 6. In a severe accident, a large amount of radioactive materials are transferred, through the safety relief valves 72 (See FIG. 15), the gas vent pipe 22 and the LOCA vent pipes 8, into the water of the suppression pool 6, scrubbed and trapped in there. The amount is about 25 % of the total radioactive materials which have existed in the core fuel. Namely, it is the same as about 25 % of debris effectively exists in the suppression pool 6. Because of this, the water in the suppression pool 6 starts boiling due to the decay heat of the radioactive materials. As the water in the suppression pool 6 starts boiling, high-pressure steam goes into the wet well gas phase 7 and the pressure in the wet well gas phase 7 increases. The pressure in the dry well 4 is relatively low because it is cooled by the passive containment cooling system 12. Because of this, the pressure in the wet well gas phase 7 becomes higher than that in the dry well 4 and the mixture gases consisting of nitrogen, hydrogen and steam in the wet well gas phase 7 go into the dry well 4 thorough the vacuum breakers 9. The mixture gases by own pressure go into the heat exchanger 16 of the passive containment cooling system 12 through the dry well gas supply pipe 20. Steam is condensed by the heat exchanger tubes 19. However, nitrogen and hydrogen are noncondensable gases and become stagnant in the heat exchanger tubes 19. It is originally configured so that the noncondensable gases in the heat exchanger tubes 19 can be vented to the suppression pool 6 from the outlet plenum 18 though the gas vent pipe 22. However, in the situation where the water in the suppression pool 6 is boiling, as the pressure in the wet well gas phase 7 is higher than that in the dry well 4, it becomes impossible to vent the noncondensable gases in the heat exchanger tubes 19 to the suppression pool 6. Because of this, the passive containment cooling system 12 becomes unable to suck gases in the dry well 4 and loses its function. Namely, if the water in the suppression pool 6 starts boiling, the passive containment cooling system 12 loses its function. This phenomenon happens almost simultaneously as the water in the suppression pool 6 starts boiling. However, in the present invention, as the gas vent fan 22a is installed on the gas vent pipe 22, it is possible to vent forcedly the noncondensable gases in the heat exchanger tubes 19. In this way, as the noncondensable gases in the heat exchanger 16 are vented to the suppression pool 6, the passive containment cooling system 12 can keep its cooling function. The passive containment cooling system 12 of the present embodiment configured in this way can prevent overpressure failures of the containment vessel 3 in the long term only by replenishing the cooling water 14. In this way, an operation method of the passive containment cooling system 12 is called a gas vent fan mode in which the gas vent fan 22a is operated. The gas vent fan mode can be used concurrently with the other operation modes.

### Second Embodiment

FIG. 2 is a sectional elevational view showing a configuration around a containment vessel of a nuclear plant according to a second embodiment of the present invention. Points where the second embodiment is different from the conventional ABWR are described below.

### <Explanation Relating to FIG. 2: a Configuration of a Passive Containment Cooling System of the Second Embodiment>

With reference to FIG. 2, a configuration of a passive containment cooling system of the second embodiment will be described. In the second embodiment, further, a backflow prevention device 52 is installed in the middle of the condensate return pipe 21 and a tip of the condensate return pipe 21 is connected to a wet well sparger 53 in the wet well gas phase 7. The other configuration of the passive containment cooling system (PCCS) 12 of the second embodiment is the same as that of the first embodiment. The wet well sparger 53 may use a sparger of a residual heat removal system (not shown).

Although FIG. 2 shows an example of a water seal tank for the backflow prevention device 52, a type of the backflow prevention device 52 is not limited to this example. The backflow prevention device 52 may use a U-shaped water seal pipe or a check valve. In the case of a water seal tank, water is stored inside and the condensate return pipe 21 is on the way once submerged and opened in the water. A continuation part of the condensate return pipe 21 is again connected to a part of the water seal tank above the water surface. A tip of the continuation part of the condensate return pipe 21 is connected to the wet well sparger 53 in the wet well gas phase 7. In the case of a U-shaped water seal pipe, water is also stored inside. The purpose of the backflow prevention device 52 is to prevent gases in the wet well gas phase 7 from flowing back in the condensate return pipe 21, flowing into the heat exchanger 16 of the passive containment cooling system 12, and causing a loss of cooling function of the passive containment cooling system 12. In an SBO, steam generated in the core is released from the safety relief valve 72 (See FIG. 15) to the suppression pool 6. In a long-term, high-pressure steam is generated from the water near the surface of the suppression pool 6. There is a risk that the high-pressure steam together with noncondensable gases in the wet well gas phase 7 flow back in the condensate return pipe 21 and flow into the heat exchanger 16 of the passive containment cooling system 12. The backflow prevention device 52 can prevent this backflow. Further, in a severe accident, hydrogen generated in the core is also released from the safety relief valve 72 to the suppression pool 6 and transferred to the wet well gas phase 7. Due to this, the wet well gas phase 7 is pressurized by addition of the hydrogen to the nitrogen that has existed originally. There is a risk that the mixture gases of the hydrogen and the nitrogen flow back in the condensate return pipe 21 and flow into the heat exchanger 16 of the passive containment cooling system 12. The backflow prevention device 52 can prevent this backflow. It is known that about 0.25 m depth of the stored water in a water seal tank and a U-shaped water seal pipe is enough for backflow prevention.

Further, in the case of a water seal tank and a U-shaped water seal pipe, in a loss of coolant accident and a severe accident, it can be prevented that gases including radioactive materials in the dry well 4 bypass the gas vent pipe 22, flow through the condensate return pipe 21, and get into the wet well gas phase 7 directly. Especially, in a loss of coolant accident, as a large amount of steam generated immediately after a break in the dry well 4 exceeds the cooling capacity of the heat exchanger 16, there is a risk that a large amount of steam which cannot be condensed flows thorough the condensate return pipe 21 and gets into the wet well gas phase 7 directly. If it happens in that way, the pressure suppression function of the wet well 5 is disabled. In the case of a water seal tank and a U-shaped water seal pipe, it is possible to prevent such a bypass by increasing the depth of the stored water. In this case, the depth of the stored water in a water seal tank and a U-shaped water seal pipe must be deeper than the submergence depth of the gas vent pipe 22 in the suppression pool 6 (See FIG. 1). By doing this, steam and gases will flow in the gas vent pipe 22 not in the condensate return pipe 21.

In the second embodiment configured in this way, it is possible in a severe accident to sparge the condensate condensed in the heat exchanger 16 of the passive containment cooling system 12, through the condensate return pipe 21, into the wet well gas phase 7 from the wet well sparger 53. In a severe accident, a large amount of steam and high-temperature hydrogen are released from the reactor pressure vessel 2 through the safety relief valve 72 (See FIG. 15) to the suppression pool 6. Due to this, the temperature of the pool water in the suppression pool 6 increases. It has been realized from the lessons learned of the Fukushima Daiichi accident that the temperature of the pool water becomes stratified when the pool water heats up and that the water near the surface heats up earlier and generates high-pressure steam. As the core debris melts thorough the bottom of the reactor pressure vessel 2 and drops to the lower part of the lower dry well 61a, the fusible valves 64 open and the water in the LOCA vent pipes 8 flows into the lower dry well 61a and floods the debris. Then a large amount of steam generates due to heat of the debris and pressurizes the dry well 4. The steam and nitrogen in the dry well 4 are vented through the LOCA vent pipes 8 and the gas vent pipe 22 of the passive containment cooling system 12 to the suppression pool 6. The steam condenses in the water of the suppression pool 6 and further increases the temperature of the water. Nitrogen does not condense and transfers into the wet well gas phase 7. In this way, in a severe accident, nitrogen in the dry well 4 and a large amount of hydrogen generated by metal-water reaction and transferred through the safety relief valve 72 (See FIG. 15) are existing in the wet well gas phase 7. Therefore, the wet well gas phase 7 is already pressurized very high to a condition where an overpressure failure almost can happen. In addition to that, if the water in the suppression pool 6 becomes stratified, high-pressure steam is generated earlier from the water near the surface. Because of this, the wet well gas phase 7 is pressurized earlier and the timing of an overpressure failure of the containment vessel 3 becomes earlier. In order to prevent an overpressure failure, Japanese Nuclear Regulation Authority (NRA) requires to use a filtered venting system. A filtered venting system is a dangerous equipment which releases radioactive noble gases and organic iodine to the environment directly. It is a dangerous equipment that gives priority to prevention of failures of the containment vessel 3 and land contamination. Therefore, evacuation of the people in the surrounding area must be conducted completely before the activation of a filtered venting system. There must be enough time for evacuation of the people in the surrounding area. However, there has been a risk that due to a stratification of the suppression pool 6, the timing of activation of a filtered venting system needs to be so early that radioactive noble gasses and organic iodine are released before the completion of evacuation of the surrounding people resulting in exposure to the people. In an SBO, an emergency preparedness planning is made by a local government in which preparation of evacuation of people in a precautionary action zone is initiated at a moment of an SBO occurrence and further evacuation is initiated if a loss of cooling function occurs. However, in a worst scenario, it is about 2 hours from an SBO occurrence to an initiation of a core melt and about 5 hours to a melt through of the reactor pressure vessel 2. Moreover, if a stratification of the water in the suppression pool 6 occurs, the timing of overpressure failures of the containment vessel 3 is about 20 hours to about 55 hours in the case of the ABWR. If a mega earthquake happens at night and an SBO occurs, it depends on the substance of the emergency preparedness planning whether evacuation of the people trapped in collapsed houses can be really completed in about 20 hours to about 55 hours using destroyed roads and unlighted traffic signals. The time margin is about 20 hours in case about 20 % in-core residual debris exists. If it can be assumed preferably that there is no in-core residual debris exists, the time margin is about 55 hours.

However, according to the present embodiment, it is possible to sparge the condensate generated in the heat exchanger 16 of the passive containment cooling system 12 into the wet well gas phase 7. The temperature of the sparged water is about 60 degrees Celsius at first because the temperature of the cooling water 14 of the passive containment cooling system 12 is low at first in an accident. Then the temperature of the sparged water becomes constant at about 130 degrees Celsius when the temperature of the cooling water 14 reaches about 100 degrees Celsius. On the contrary, if the suppression pool 6 becomes stratified, the temperature of the water near the surface reaches no less than about 180 degrees Celsius. However, in the present embodiment, high-temperature steam generated from the suppression pool 6 can be condensed by the sparged water. Further, as the sparged water drops on to the water surface of which temperature is the highest in the suppression pool 6, it is possible to prevent a stratification of the suppression pool 6 and maintain the temperature at about 130 degrees Celsius which is the same temperature of the sparged water. Furthermore, as for the decay heat of the debris, the passive containment cooling system 12 can cool not only the decay heat of the in-core residual debris but also that of the debris which has dropped on to the floor of the lower dry well 61a. Therefore, it becomes possible to delay the timing of an overpressure failure of the containment vessel 3 beyond 3 days. If the cooling water 14 is replenished, it becomes possible to delay the timing of an overpressure failure of the containment vessel 3 further and eventually prevent an overpressure failure itself.

In this way, an operation method of the passive containment cooling system 12 is called a wet well spray mode in which the reactor pressure vessel injection pipe isolation valve 51a is closed and the condensate return pipe isolation valve 21a is opened to spray the condensate into the wet well gas phase 7. Plurality of heat exchangers 16 of the passive containment cooling system 12 may be installed. For example, if four heat exchangers 16 are installed, it is supposed that two heat exchangers 16 are operated in the wet well spray mode and the other two heat exchangers 16 are operated in the reactor pressure vessel injection mode. By doing so, it becomes possible to prevent not only overpressure failures but also overheat failures of the containment vessel 3.

### Third Embodiment

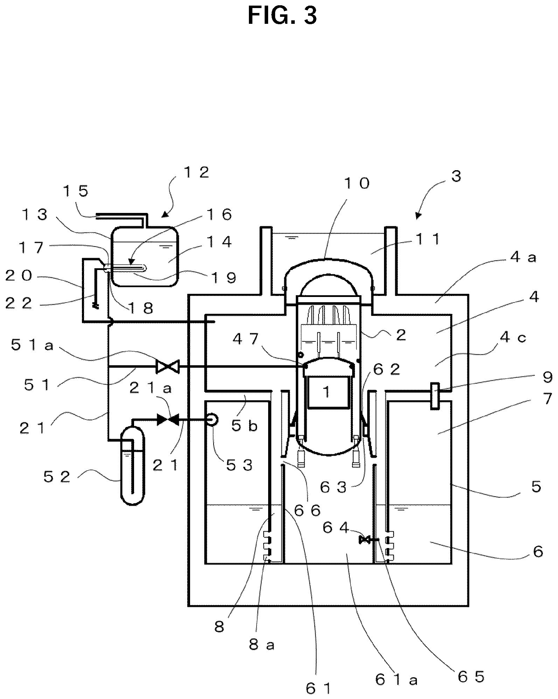

FIG. 3 is a sectional elevational view showing a configuration around a containment vessel of a nuclear plant according to a third embodiment of the present invention. Points where the third embodiment is different from the conventional ABWR are described below.

### <Explanation Relating to FIG. 3: a Configuration of a Passive Containment Cooling System of the Third Embodiment>

With reference to FIG. 3, a configuration of a passive containment cooling system of the third embodiment will be described. In the third embodiment, a reactor pressure vessel injection pipe 51 is connected to a high-pressure core flooder system sparger 47 (See FIG. 19) in a shroud head 2b in a reactor pressure vessel 2. The other configuration of the passive containment cooling system (PCCS) 12 of the third embodiment is the same as that of the second embodiment.

In the third embodiment configured in this way, it becomes possible to spray the condensate into the shroud head 2b (See FIG. 19) in the reactor pressure vessel 2. Thus, it becomes possible to spray the condensate directly to a core 1 in the shroud 2a. Owing to this, it becomes possible to spray the condensate to an in-core residual debris directly and decrease the temperature in the reactor pressure vessel 2 further.

Further, if the bottom head 2g of the reactor pressure vessel 2 is largely melted through in a severe accident, in the case of the second embodiment, the condensate sprayed from the feedwater sparger 50 goes down in the downcomer 2d, drops into the lower plenum 2f of the reactor pressure vessel 2 through the diffusers 42 of the reactor internal pumps 40 and then drops into the lower dry well 61a through a break location of the bottom head 2g (See FIG. 19). In this way, in the case of the second embodiment, the condensate does not cool the in-core residual debris but flows out of the reactor pressure vessel 2. Therefore, if the bottom head 2g of the reactor pressure vessel 2 is largely melted thorough, there is a risk that a sufficient cooling performance cannot be attained.

However, according to the third embodiment, even if the bottom head 2g of the reactor pressure vessel 2 is largely melted thorough, it becomes possible to attain a sufficient cooling performance because the condensate can be sprayed directly to the in-core residual debris and cool it through the sparger 47 of the high-pressure core flooder system

### Fourth Embodiment

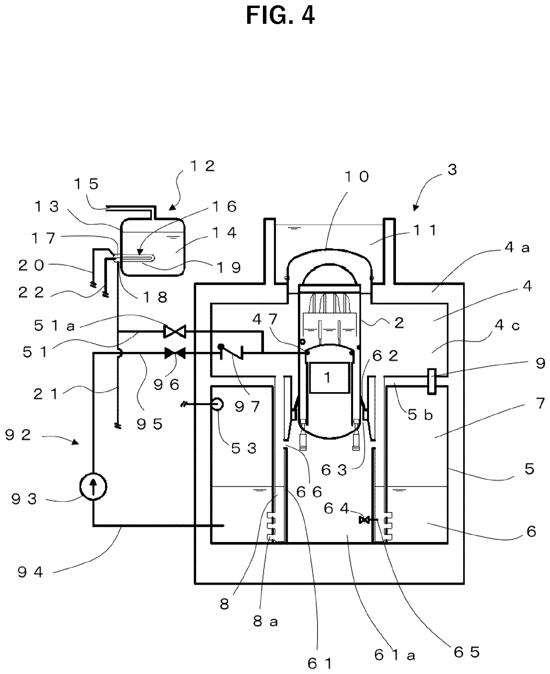

FIG. 4 is a sectional elevational view showing a configuration around a containment vessel of a nuclear plant according to a fourth embodiment of the present invention. Points where the fourth embodiment is different from the conventional ABWR are described below.

### < Explanation Relating to FIG. 4: a Configuration of a Passive Containment Cooling System of the Fourth Embodiment >

With reference to FIG. 4, a configuration of a passive containment cooling system of the fourth embodiment will be described. In the fourth embodiment, a reactor pressure vessel injection pipe 51 is connected to a high-pressure core flooder system injection pipe 95 of a high-pressure core flooder system 92. A connection point is between a high-pressure core flooder system outer isolation valve 96 and a reactor pressure vessel 2. In FIG. 4, although an example in which a connection point is between a high-pressure core flooder system inner isolation valve 97 and the reactor pressure vessel 2 is shown, a connection point is not limited thereto. For example, a connection point may be between a high-pressure core flooder system outer isolation valve 96 and a containment vessel 3. In this case, the reactor pressure vessel injection pipe 51 does not need to penetrate the containment vessel 3. In the present embodiment, it becomes possible to utilize the high-pressure core flooder system injection pipe 95 of the high-pressure core flooder system 92, which is already existing, to spray the condensate from a high-pressure core flooder system sparger 47 (See FIG. 19) in a shroud head 2b in the reactor pressure vessel 2. The other configuration of the passive containment cooling system (PCCS) 12 of the fourth embodiment is the same as that of the second embodiment.

Tow high-pressure core flooder systems 92 are installed in the ABWR. This was done by the inventor of the present invention, in order to reduce an occurrence frequency of an automatic depressurization system (ADS) (not shown) and also an occurrence frequency of a high-pressure scenario which is called TQUX sequence in a probabilistic risk assessment (PRA). Meanwhile, plurality of heat exchangers 16, for example four and the like, of the passive containment cooling system 12 are installed. In that case, according to the fourth embodiment, it is supposed that two of the reactor pressure vessel injection pipes 51 of the heat exchangers 16 are connected to two of the high-pressure core flooder system injection pipes 95 of the high-pressure core flooder systems 92. As for the other two of the heat exchangers 16, a configuration where the reactor pressure vessel injection pipe 51 and the reactor pressure vessel injection pipe isolation valve 51a are eliminated in the second embodiment may be considered. The former two of the heat exchangers 16 are operated in the reactor pressure vessel injection mode and able to prevent overheat failures of the containment vessel 3. On the other hand, the latter two of the heat exchangers 16 are operated in the wet well spray mode and able to prevent overpressure failures of the containment vessel 3. In this way, it becomes possible to prevent both overheat failures and overpressure failures of the containment vessel 3 by the passive containment cooling system 12.

### Fifth Embodiment

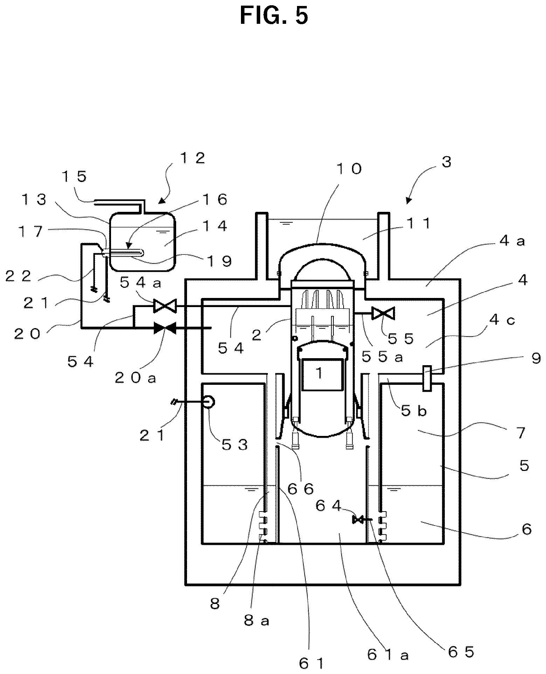

FIG. 5 is a sectional elevational view showing a configuration around a containment vessel of a nuclear plant according to a fifth embodiment of the present invention. Points where the fifth embodiment is different from the conventional ABWR are described below.

### < Explanation Relating to FIG. 5: a Configuration of a Passive Containment Cooling System of the Fifth Embodiment >

With reference to FIG. 5, a configuration of a passive containment cooling system of the fifth embodiment will be described. In the fifth embodiment, a dry well gas supply pipe isolation valve 20a is installed on a dry well gas supply pipe 20. Although in FIG. 5 it is shown that the dry well gas supply pipe isolation valve 20a is closed, it is opened during normal operation. However, the dry well gas supply pipe isolation valve 20a may be closed during normal operation and opened after an accident happens.

In the present embodiment, further, a reactor pressure vessel (RPV) gas supply pipe 54 is installed and connected to the dry well gas supply pipe 20. One end of the reactor pressure vessel (RPV) gas supply pipe 54 is connected to the dry well gas supply pipe 20 at a connection point between an inlet plenum 17 of a heat exchanger 16 and the dry well gas supply pipe isolation valve 20a. After the reactor pressure vessel (RPV) gas supply pipe 54 penetrates a containment vessel 3, the other end of the reactor pressure vessel (RPV) gas supply pipe 54 is connected to a vapor phase 2s (See FIG. 19) in a reactor pressure vessel 2. A reactor pressure vessel (RPV) gas supply pipe isolation valve 54a is installed on the reactor pressure vessel (RPV) gas supply pipe 54. Although it is shown that the reactor pressure vessel (RPV) gas supply pipe isolation valve 54a is opened in the figure, it is closed during normal operation. A motor operated valve, an air operated valve, a squib valve and the like can be used for the reactor pressure vessel (RPV) gas supply pipe isolation valve 54a. Although in the present invention a configuration where one end of the reactor pressure vessel (RPV) gas supply pipe 54 is connected to the dry well gas supply pipe 20 is shown as an example, a configuration is not limited this example. One end of the reactor pressure vessel (RPV) gas supply pipe 54 may be connected to the inlet plenum 17 of the heat exchanger 16 directly.

In the present embodiment, further, an equalizing valve 55 is installed. The equalizing valve 55 is by way of a stub pipe 55a connected to the vapor phase 2s (See FIG. 19) in the reactor pressure vessel 2. Although it is shown in FIG. 5 that the equalizing valve 55 is opened, it is closed during normal operation. Although in FIG. 5 a configuration where the stub pipe 55a is connected to the reactor pressure vessel 2, a configuration is not limited thereto. For example, the stub pipe 55a may be connected to a main steam pipe 71 (See FIG. 15). The stub pipe 55a is configured to release gases in the vapor phase 2s in the reactor pressure vessel 2 thorough the equalizing valve 55 to an upper dry well 4c so that the pressure in the reactor pressure vessel 2 and the pressure in the upper dry well 4c are equalized. A motor operated valve, an air operated valve, a squib valve and the like can be used for the equalizing valve 55. The configuration of the equalizing valve 55 is similar to a depressurization valve of the ESBWR. However, the equalizing valve 55 is configured to activate only after the reactor pressure vessel 2 is depressurized. On the contrary, the depressurization valve of the ESBWR activates when the reactor pressure vessel 2 is in a high-pressure condition. If the depressurization valve activates from a high-pressure condition in a severe accident, a large amount of radioactive materials are released to a dry well 4 and deposited on the wall, the floor and the like in the dry well 4. Therefore, there is a risk of overheat failures of the dry well 4 due to continuous release of decay heat from the deposited radioactive materials. This is one of problems of the ESBWR which uses the depressurization valve. On the contrary, because the equalizing valve 55 does not activate in a high-pressure condition, a large amount of radioactive materials in the reactor pressure vessel 2 are released from a safety relief valve 72 (See FIG. 15) to a suppression pool 6. Therefore, even if the equalizing valve 55 is activated after the reactor pressure vessel 2 is depressurized, an overheat failure of the dry well 4 does not occur because a large amount of radioactive materials are not released to the dry well 4. This point is the difference between the equalizing valve 55 and the depressurization valve of the ESBWR. The other configuration of the passive containment cooling system (PCCS) 12 of the fifth embodiment is the same as that of the fourth embodiment.

Action of the fifth embodiment configured in this way in a severe accident will be described below. If a core melt accident occurs due to an SBO and the like, a core debris melts through the bottom of the reactor pressure vessel 2 and drops to a lower part of a lower dry well 61a. As the temperature in the lower dry well 61a rises due to heat of the debris, fusible valves 64 open. Then water in LOCA vent pipes 8 flows into the lower dry well 61a and floods the debris which has dropped to a lower part of the lower dry well 61a. A large amount of steam generates from the flooding water due to heat of the debris. The steam moves to the upper dry well 4c via openings 66 in the lower dry well 61a and forms mixture gases with nitrogen and hydrogen and the like. The mixture gases go into the heat exchanger 16 via the dry well gas supply pipe 20 by own pressure. The steam is cooled by heat exchanger tubes 19 and becomes condensate. The condensate flows into an outlet plenum 18. Further, the condensate is returned through a condensate return pipe 21 and sprayed from a wet well sparger 53 to a wet well gas phase 7 (See FIG. 2). Namely, the heat exchanger 16 is operated in a wet well spray mode. As nitrogen and hydrogen are noncondensable gases, they are not condensed and vented through a gas vent pipe 22 to the suppression pool 6. After this situation continues for a while, almost all of the nitrogen and hydrogen in the dry well 4 are vented to the suppression pool 6 and transferred to the wet well gas phase 7. As a result, the dry well 4 will be occupied only by steam in about one hour.

In this situation, the reactor pressure vessel 2 is already depressurized due to the bottom break of the reactor pressure vessel 2 and the signals of low-pressure in a reactor pressure vessel and high radiation level in a containment vessel are activated. After this situation is confirmed, the condensate return pipe isolation valve 21a is closed and a reactor pressure vessel injection pipe isolation valve 51a is opened. Namely, the passive containment cooling system 12 starts operation in a reactor pressure vessel injection mode (See FIG. 3). In the present embodiment shown in FIG. 5, further, the equalizing valve 55 and the reactor pressure vessel gas supply pipe isolation valve 54a are opened and the dry well gas supply pipe isolation valve 20a is closed. These switching of the isolation valves may be conducted either manually or automatically by signals.

After these switching of the isolation valves is completed, because the dry well gas supply pipe isolation valve 20a is closed, steam in the dry well 4 flows into the reactor pressure vessel 2 thorough the bottom break of the reactor pressure vessel 2 and the equalizing valve 55 and flows into the heat exchanger 16 through the reactor pressure vessel gas supply pipe 54 by its own pressure. The steam is cooled by the heat exchanger tubes 19 and becomes condensate. The condensate flows into the outlet plenum 18. As the passive containment cooling system 12 is already operated in the reactor pressure vessel injection mode, the condensate in the outlet plenum 18 is sprayed into the reactor pressure vessel 2 thorough the reactor pressure vessel injection pipe 51 (See FIG. 3).

According to the present embodiment, in this way, steam in the dry well 4 once flows inside of the reactor pressure vessel 2 and then flows to the heat exchanger 16 of the passive containment cooling system 12. The flow rate is very large and about 10,000 m³/h. Steam generated from the water flooding the debris in the lower dry well 61a is saturated steam of which temperature is about 130 degrees Celsius. That steam flows into the reactor pressure vessel 2 with enormous flow rate and flows out to the passive containment cooling system 12. In that process, an in-core residual debris in the reactor pressure vessel 2 is cooled by air-cooling effect of the steam. Air-cooling effect which is the same air-cooling effect as a huge fan is cooling the in-core residual debris can be attained. As a result, an effect of further reducing the temperature in the reactor pressure vessel 2 can be attained so that the temperature in the reactor pressure vessel 2 reduces to a range from about 250 degrees Celsius to about 350 degrees Celsius. In the present embodiment, as the low-temperature steam flows in a steam dome 2e in the reactor pressure vessel 2 with the enormous flow rate, the temperature of a reactor pressure vessel top head portion 2c decreases so that the temperature in a top head section 10a of the containment vessel 3 can further decrease well below 200 degrees Celsius. Thus, it becomes possible to prevent more firmly a large amount of hydrogen and radioactive materials from leaking out to an operating floor due to deterioration of a seal material of a flange 74 of a top head 10 of the containment vessel 3. In this way, an operation method of the passive containment cooling system 12 is called an in-vessel steam cooling mode in which inside of the reactor pressure vessel 2 is cooled by air-cooling effect of an enormous flow rate of steam generated in the dry well 4 and led into the reactor pressure vessel 2. For the in-vessel steam cooling mode, isolation valves are switched in a manner where the equalizing valve 55 is opened, the reactor pressure vessel gas supply pipe isolation valve 54a is opened, and the dry well gas supply pipe isolation valve 20a is closed. The in-vessel steam cooling mode can be used concurrently with the other operation modes.

The present embodiment configured in this way can meet the requirement of the Japanese Nuclear Regulation Authority (NRA). It requires, in the Requirement Details of the Article 42 of the New Regulatory Requirements, that cooling function of molten core in the reactor shall be prepared (Example: equipment for injecting low-pressure water inside the reactor). The present embodiment can meet constituent elements of the requirement. Moreover, the present embodiment can meet the requirement by means of the passive containment cooling system 12 which does not use any pumps, power sources and the like. The NRA only requires cooling function of molten core in the reactor. As for the method, the NRA gives an example of injecting low-pressure water inside the reactor, but does not limit to that example. Therefore, the cooling function of molten core in a reactor by an air-cooling effect of steam, according to the present invention, meets the requirement of the NRA. The present invention provides a cooling function of molten core inside a reactor pressure vessel with low cost and high reliability by means of the passive air-cooling function of the passive containment cooling system 12, without using an active pump of a low-pressure injection equipment or its power source by an innovative method which the NRA could not conceive. The energy source of action is decay heat of debris. Because there is no need for a low-pressure injection equipment for a severe accident and an active power source for a severe accident, it becomes possible to attain cost reduction and increase of reliability simultaneously. In this way, the present inventor designates such a way of design thinking as Positive Cost down Philosophy in which cost reduction and increase of performance are attained simultaneously. He also designates the way of design thinking as Off the Shelf Philosophy in which a designer should and could attain an innovative design by already existing technology that is the passive containment cooling system 12 in this case. What enables these ways of design thinking is a novel innovative value created by the invention made by a designer.

By the way, pressure of the steam in the dry well 4 needs to become high in order for the steam in the dry well 4 to push down the water in the LOCA vent pipes 8 and flow into the suppression pool 6 (called vent clear). In the case where the water depth in the suppression pool 6 is deep enough, the necessary pressure for vent clear becomes large. Thus, as the necessary pressure for vent clear becomes larger than the pressure difference between the reactor pressure vessel 2 and the dry well 4, it becomes possible that the steam in the dry well 4 can flow into inside of the reactor pressure vessel 2 from a break location of the bottom of the reactor pressure vessel 2 even if the equalizing valve 55 is not installed. Namely, if the water depth of the suppression pool 6 is sufficiently deep, the equalizing valve 55 is not necessary. On the contrary, if the water depth of the suppression pool 6 is not sufficiently deep, as the necessary pressure for vent clear becomes small, the steam in the dry well 4 flows into the suppression pool 6 by vent clear of the LOCA vent pipes 8. In that case, the steam in the dry well 4 does not flow into the reactor pressure vessel 2 but flows into the suppression pool 6. In order to avoid this, the equalizing valve 55 becomes effective.

### Sixth Embodiment

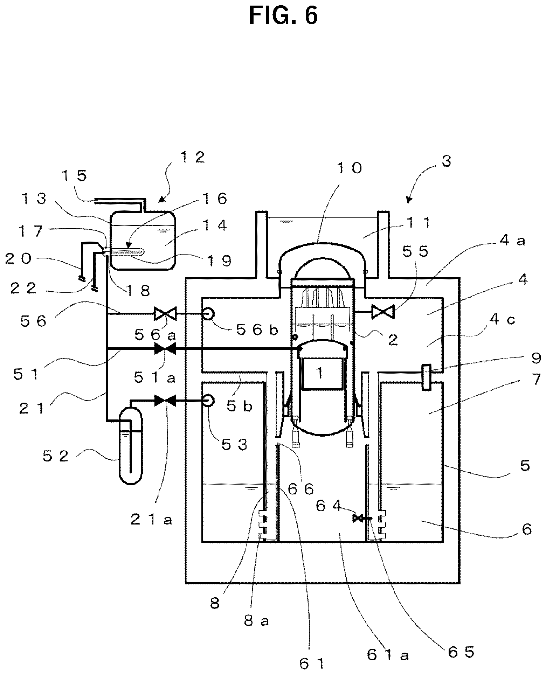

FIG. 6 is a sectional elevational view showing a configuration around a containment vessel of a nuclear plant according to a sixth embodiment of the present invention. Points where the sixth embodiment is different from the conventional ABWR are described below.

### < Explanation Relating to FIG. 6: a Configuration of a Passive Containment Cooling System of the Sixth Embodiment >

With reference to FIG. 6, a configuration of a passive containment cooling system of the sixth embodiment will be described. In the sixth embodiment, a dry well spray pipe 56 is installed having one end connected to a condensate return pipe 21. Connecting point of the dry well spray pipe 56 to the condensate return pipe 21 is below a lower plenum 18 of a heat exchanger 16 and above another connecting point of a reactor pressure vessel injection pipe 51 to the condensate return pipe 21. A dry well spray pipe isolation valve 56a is installed on the dry well spray pipe 56. The dry well spray pipe 56 penetrates a containment vessel 3. The other end of the dry well spray pipe 56 is connected to a dry well spray sparger 56b. As for the dry well spray sparger 56b, a containment vessel spray sparger of a residual heat removal system (RHR) (not shown) may be used. The other configuration of the passive containment cooling system (PCCS) 12 of the sixth embodiment is the same as that of the fifth embodiment.

In the present embodiment configured in this way, it becomes possible to spray condensate in the outlet plenum 18 of the heat exchanger 16 into an upper dry well 4c in a severe accident from the dry well spray sparger 56b by the dry well spray pipe 56 with a condensate return pipe isolation valve 21a being closed, a reactor pressure vessel injection pipe isolation valve 51a being closed and the dry well spray pipe isolation valve 56a being opened. In this way, an operation method of the passive containment cooling system 12 is called a dry well spray mode. As there is a level difference more than about 5 m between the outlet plenum 18 and the dry well spray sparger 56b, it is possible to spray the condensate into a dry well 4. The dry well spray mode cannot be used concurrently with a reactor pressure vessel injection mode and a wet well spray mode in the same passive containment cooling system 12. The dry well spray mode can be used concurrently with an in-vessel steam cooling mode and a gas vent fan mode in the same passive containment cooling system 12. However, the dry well spay mode can be used concurrently with all the other operation modes in a different passive containment cooling system 12.

Action and effect of the present embodiment will be described below. It is assumed that the main steam pipe 71 (See FIG. 5) is broken in the containment vessel 3 and a core melt accident occurs subsequently. If a mega earthquake happens and caused a break of a main steam pipe 71 and an SBO simultaneously, there is a risk of a core melt accident after a main steam line break accident. In that case, a large amount of hydrogen and radioactive materials generated during progression of core melt are released into the upper dry well 4c through the break of the main steam pipe 71. The hydrogen is vented to a suppression pool 6 and transferred into a wet well gas phase 7 through LOCA vent pipes 8 and a gas vent pipe 22. On the contrary, as for the large amount of radioactive materials released into the upper dry well 4c, although some of them are transferred to the suppression pool 6, most of them are deposited to a wall, a floor and the like in the upper dry well 4c and keep releasing decay heat. The amount of the radioactive materials released to the upper dry well 4c is as much as about 25 % of radioactive materials which have existed in core fuels. In the case of an ordinary severe accident, these about 25 % of the radioactive materials are transferred by a safety relief valve 72 (See FIG. 15) to the suppression pool 6 and cooled by the pool water. However, in the case of a main steam line break accident, these about 25 % of the radioactive materials are released from the break, mostly deposited to the inside of the upper dry well 4c, and existing in a gas phase without cooling. This is an awful situation which exceeds that of the Fukushima Daiichi Accident. If this situation is left alone, the temperature in the upper dry well 4c exceeds 400 degrees Celsius and overheat failures of the containment vessel 3 occur.

Meanwhile, a large amount of debris more than 30 % does not drop to the lower dry well 61a and remains in the reactor pressure vessel 2. Because the reactor pressure vessel can release heat from the break of the main steam pipe 71 and cooled, more debris remains in the core more than an ordinary severe accident. However, after a melt through and a bottom break of the reactor pressure vessel 2 happen, as the main steam pipe 71 has a large diameter so that the break of the main steam pipe 71 has an effect equal to or more than the equalizing valve 55. As a result, steam flow happens in such a way that steam in the dry well 4 flows into the reactor pressure vessel 2 from the bottom break of the reactor pressure vessel 2 and flows out from the break of the main steam pipe 71. Owing to this, the steam flow and its air-cooling effect for the in-core residual debris, the temperature in the reactor pressure vessel 2 decreases below 400 degrees Celsius. In this situation, there is not so much effect and necessity to cool the in-core residual debris by a reactor pressure vessel injection mode. On the other hand, the temperature in the upper dry well 4c exceeds 400 degrees Celsius due to decay heat of the deposited radioactive materials if the situation is left alone. This is an awful situation.

This situation also happens similarly in a loss of coolant accident of a PWR. A large amount of radioactive materials are released from a break of a cold leg pipe into a containment vessel, deposited on a wall, a floor and the like, and continue to release decay heat without being cooled. It is almost no meaning only installing a core catcher to cool debris therein or providing In Vessel Retention to prevent a melt thorough break of a bottom of a reactor pressure vessel. Overheat failures of the containment vessel happen due to the decay heat of the deposited radioactive materials in the containment vessel. Especially in the case of the In Vessel Retention, overheat failures of containment vessel happen due to the decay heat from 100 % debris existing in the reactor pressure vessel. For this phenomenon, of course there are examples of PWR designed for having countermeasures in which the outer surface of the containment can be cooled directly by water and air, or a dedicated containment spray system for a severe accident can spray water. However, there are also some PWR which does not have countermeasures to cool the deposited radioactive materials in the containment vessel, considering only a core catcher is good enough for a severe accident. This is because an analysis model which can treat heat release from the in-core residual debris is not sufficiently developed for PWR in a physical phenomenal analysis code so that the lessons learned of the Fukushima Daiichi accident are not recognized sufficiently. Therefore, there are also PWR designed by recognition that all the debris in a core can drop into a core catcher and that if the core catcher is flooded, then it is well enough to prevent only overpressure failures. This is awful. The lessons learned of the Fukushima Daiichi accident was that a containment vessel fails rather by overheating but not by melting through. However, countermeasures for overheating are not sufficiently provided.

As stated above, in the case of a severe accident after a main steam pipe break, although more than about 30 % debris exist in the core, the in-core residual debris can be cooled by air-cooling effect of the steam which flows from the bottom break of the RPV to the break of the main steam pipe 71. On the contrary, a large amount of radioactive materials released from the break of the main steam pipe 71 are deposited on the wall, on the floor and the like in the upper dry well 4c and keep releasing decay heat without being cooled. If this situation is left alone, the temperature in the upper dry well 4c exceeds 400 degrees Celsius. However, in the present embodiment, it is possible to spray the condensate of which temperature is about 130 degrees Celsius into the upper dry well 4c by switching the passive containment cooling system 12 to the dry well spray mode. Owing to this, it becomes possible to decrease the temperature in the upper dry well 4c sufficiently low.

### Seventh Embodiment

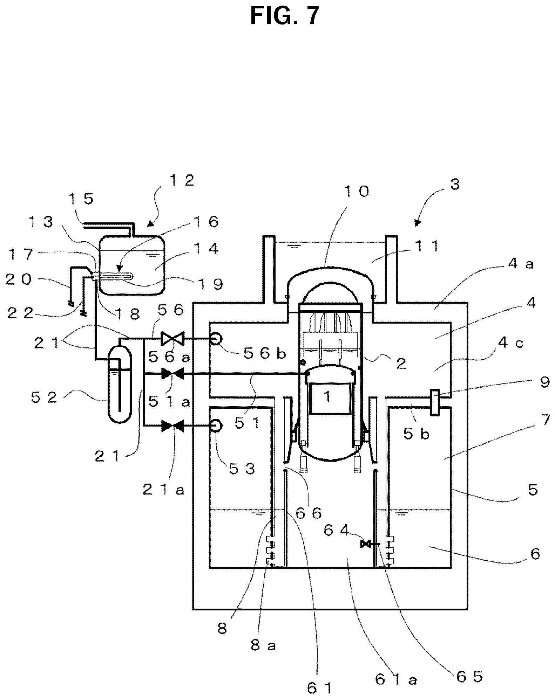

FIG. 7 is a sectional elevational view showing a configuration around a containment vessel of a nuclear plant according to a seventh embodiment of the present invention. Points where the seventh embodiment is different from the conventional ABWR are described below.

### < Explanation Relating to FIG. 7: a Configuration of a Passive Containment Cooling System of the Seventh Embodiment >

With reference to FIG. 7, a configuration of a passive containment cooling system of the seventh embodiment will be described. In the seventh embodiment, a backflow prevention device (a water seal tank) 52 is installed on a part of a condensate return pipe 21 below an outlet plenum 18 of a heat exchanger 16 and an upper stream of a connection point of a dry well spray pipe 56 and the condensate return pipe 21. The other configuration of the passive containment cooling system (PCCS) 12 of the seventh embodiment is the same as that of the sixth embodiment.

In the present embodiment, as a backflow in the dry well spray pipe 56 can be prevented, a dry well spray pipe isolation valve 56a can be opened during normal operation. In this condition, if a loss of coolant accident occurs, gases in an upper dry well 4c does not flow back in the dry well spray pipe 56. Steam in the upper dry well 4c is huge in a blowdown phase right after a loss of coolant accident, mixed with nitrogen in the upper dry well 4c and mostly vented into a suppression pool 6 via LOCA vent pipes 8. Some of gases also flow into the passive containment cooling system 12 and nitrogen is vented to the suppression pool 6 via a gas vent pipe 22. During this process, almost all nitrogen in the dry well 4 is transferred to a wet well gas phase 7. As the blowdown phase is finished and steam generation is moderated, all the steam in the upper dry well 4c becomes to flow, thorough a dry well gas supply pipe 20 but not through the LOCA vent pipes 8, into a heat exchanger 16. This is because the submergence depth of the gas vent pipe 22 in the suppression pool 6 is shallower than that of the top horizontal vent pipe 8a (See FIG. 1). This is because gases in the dry well 4 are transferred to the suppression pool 6 thorough a pass of which submergence depth is shallower. Most of the steam becomes condensate by heat exchanger tubes 19 and the condensate flows into the outlet plenum 18. Some of the steam which is not condensed and noncondensable gases are vented to the suppression pool 6 by the gas vent pipe 22. The steam is condensed in the suppression pool 6. The noncondensable gases are transferred to the wet well gas phase 7. The condensate which has flown into the outlet plenum 18 is drained by gravity thorough the condensate return pipe 21 and the dry well spray pipe 56, and sprayed into the upper dry well 4c from a dry well spray sparger 56b. The temperature of the condensate immediately after an accident is low and about 60 degrees Celsius because the temperature of cooling water 14 is still low. By spraying the low-temperature condensate into the upper dry well 4c, an effect can be obtained so that the steam in the upper dry well 4c is condensed and the pressure in a containment vessel 3 decreases rapidly. In the conventional ABWR, the pressure of the containment vessel 3 in a loss of coolant accident is kept high until switching of a residual heat removal system (RHR) (not shown), which has been functioning as a low-pressure flooder system (LPFL), to a containment spray to spray water by switching manually in 15 minutes into the accident. Further, there has been a risk that the pressure of the containment vessel 3 is kept high thereafter if the manual switching to the containment spray fails. If a mega earthquake happens and a loss of coolant accident also happens, in such a confused situation, it is not an easy thing to switch manually to a containment spray within 15 minutes by killing the LPFL which is still operating and injecting water into the core as ECCS. To begin with, it is not easy to identify precisely in 15 minutes what kind of accident is happening. However, in the present embodiment, an effect can be obtained that the pressure of the containment vessel 3 in a loss of coolant accident naturally decreases, because low-temperature water is sprayed passively and automatically by the dry well spray mode of the passive containment cooling system 12 and because the dry well spray pipe isolation valve 56b can be opened during normal operation. In the middle of confusion where operators are confused and puzzled to handle the situation, the pressure of the containment vessel 3 decreases naturally. If a loss of coolant accident occurs, the passive containment cooling system 12 according to the present embodiment can return the generated steam into low-temperature condensate and spray it into the upper dry well 4c.

### <Explanation of Embodiments based on the SATOR>

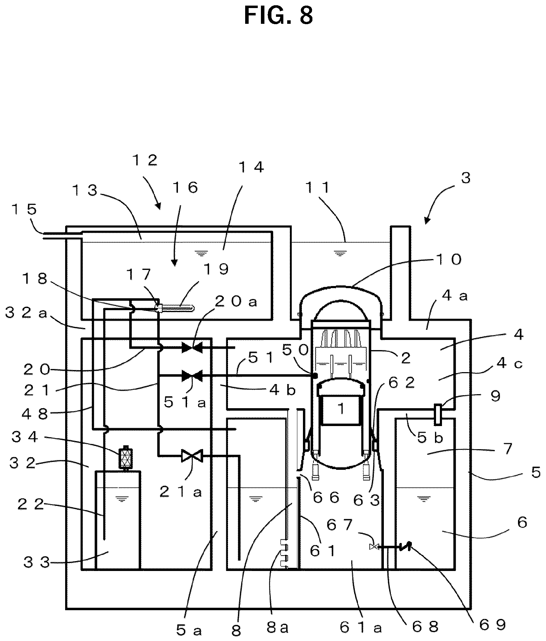

Embodiments based on the Severe Accident Tolerant and Optimized Reactor (SATOR) are described below with reference to FIGS. 8 to 14. As for embodiments 8 to 14 described below, a configuration of a core 1, a reactor pressure vessel 2, a containment vessel 3, and an outer well 32 is the same as that of the second conventional nuclear power plant (STOR) shown in FIG. 21 and FIG. 22. Further, a basic configuration of a passive containment cooling system 12 is the same as the basic configuration of the passive containment cooling system 12 of the second conventional nuclear power plant (SATOR) shown in FIG. 21 and FIG. 24. In the following description, redundant descriptions will be omitted, and only different parts of embodiments 8 to 14 from the SATOR will be described.

Though a containment vessel called RCCV is adopted in the embodiments shown in FIGS. 8 to 14, a type of a containment vessel is not limited thereto. Any pressure suppression type containment vessel that has a pressure suppression function by a suppression pool is universally applicable. As for materials, other materials such as SC composite, steel and the like also can be used.

Further, an outer well 32 is installed in the embodiments shown in FIG. 8 to FIG. 14. The same materials as those of the containment vessel 3 may all be used for the outer well 32, such as reinforced concrete (RC), an SC composite, and steel. In the case of reinforced concrete, liners are laid on the inner surfaces in the same way as the containment vessel 3. In the embodiments shown in FIG. 8 to FIG. 14, the outer well 32 has a rectangular shape in a top plan view and is configured to surround a part of outer walls of a dry well 4 and a wet well 5. However, the plane shape of the outer well 32 is not limited thereto. The outer well 32 may have any shape as long as the outer well 32 adjoins and surrounds at least a part of the outer walls of the dry well 4 and the wet well 5. Examples may include a trapezoidal shape, a polygonal shape, a crescent shape, a partially circular shape, a fully circular shape and so on.

### Eighth Embodiment

FIG. 8 is a sectional elevational view showing a configuration around a containment vessel of a nuclear plant according to an eighth embodiment of the present invention. Points where the eighth embodiment is different from the conventional SATOR (See FIG. 21) are that a reactor pressure vessel injection pipe 51, a reactor pressure vessel injection pipe isolation valve 51a and a condensate return pipe isolation valve 21a are added like the first embodiment. Owing to this, a passive containment cooling system 12 can be used in a reactor pressure vessel injection mode.

The SATOR has further in comparison with the ABWR a wet well gas supply pipe 48, an outer well 32 and a scrubbing pool 33. Therefore, the SATOR is a nuclear plant which has attained a great improvement in reduction of the pressure of a containment vessel 3 in a severe accident and prevention of leakage of radioactive materials. Even if high-pressure steam, hydrogen and radioactive materials are generated in a wet well gas phase 7, the SATOR can condense the steam by the passive containment cooling system 12, remove particulate radioactive materials by the scrubbing pool 33, and confine the hydrogen, radioactive noble gases and organic iodine in the outer well 32. Because of this, it is possible to suppress the pressure of a containment vessel 3 in a severe accident below about a design pressure, eliminate risk of overpressure failures of the containment vessel 3 and even eliminate the necessity of evacuation of surrounding people. Further, as most parts of pipes of the passive containment cooling system 12 are installed in the outer well 32, even if radioactive materials leak from the system, it is possible to contain the radioactive materials in the outer well 32. Furthermore, as there is always a pressure difference between the wet well gas phase 7 and the outer well 32, a gas vent fan is not necessary. According to the eighth embodiment, it becomes possible to prevent overheat containment failures in a severe accident more certainly.

### Ninth Embodiment

FIG. 9 is a sectional elevational view showing a configuration around a containment vessel of a nuclear plant according to a nineth embodiment of the present invention. Points where the nineth embodiment is different from the conventional SATOR are that a backflow prevention device (water seal tank) 52 and a wet well spray sparger 53 are added like the second embodiment. Owing to this, the passive containment cooling system 12 can be used in a wet well spray mode. Owing to this, it becomes possible to prevent stratification of the temperature of a suppression pool 6. The other configuration of the passive containment cooling system 12 according to the nineth embodiment is the same as that of the eighth embodiment.

### Tenth Embodiment

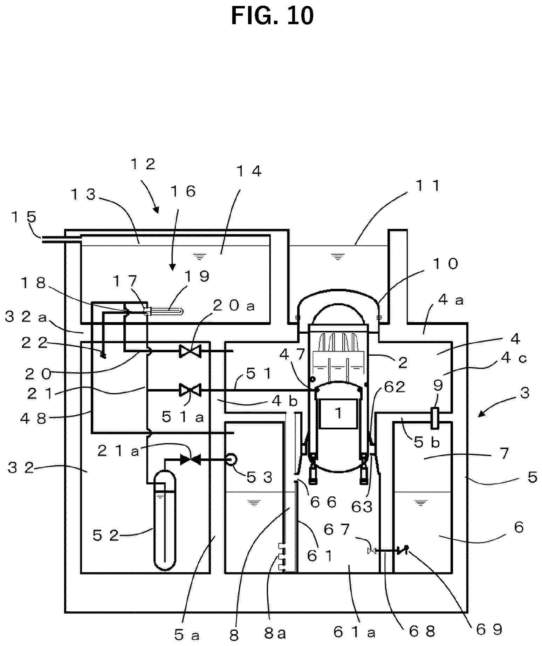

FIG. 10 is a sectional elevational view showing a configuration around a containment vessel of a nuclear plant according to a tenth embodiment of the present invention. Points where the tenth embodiment is different from the conventional SATOR are that a tip of a reactor pressure vessel injection pipe 51 is further connected to a high-pressure core flooder system sparger 47 in a shroud head 2b (See FIG. 19). Owing to this, it becomes possible to spray condensate of the passive containment cooling system 12 directly onto in-core debris. The other configuration of the passive containment cooling system 12 according to the tenth embodiment is the same as that of the nineth embodiment.

### Eleventh Embodiment

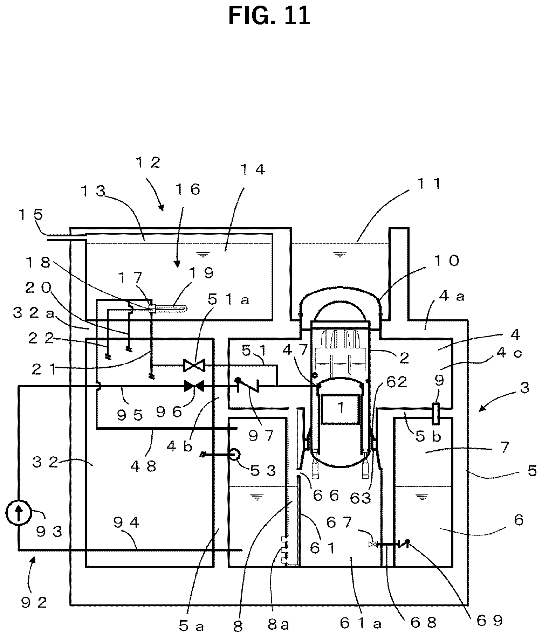

FIG. 11 is a sectional elevational view showing a configuration around a containment vessel of a nuclear plant according to an eleventh embodiment of the present invention. Points where the eleventh embodiment is different from the conventional SATOR are that a reactor pressure vessel injection pipe 51 is further connected to a high-pressure core flooder system injection pipe 95, sharing a pipe and connected to a high-pressure core flooder system sparger 47 like the fourth embodiment. Because of this, it becomes unnecessary to install a nozzle of the reactor pressure vessel injection pipe 51 on a reactor pressure vessel 2. The other configuration of the passive containment cooling system 12 according to the eleventh embodiment is the same as that of the tenth embodiment.

### Twelfth Embodiment

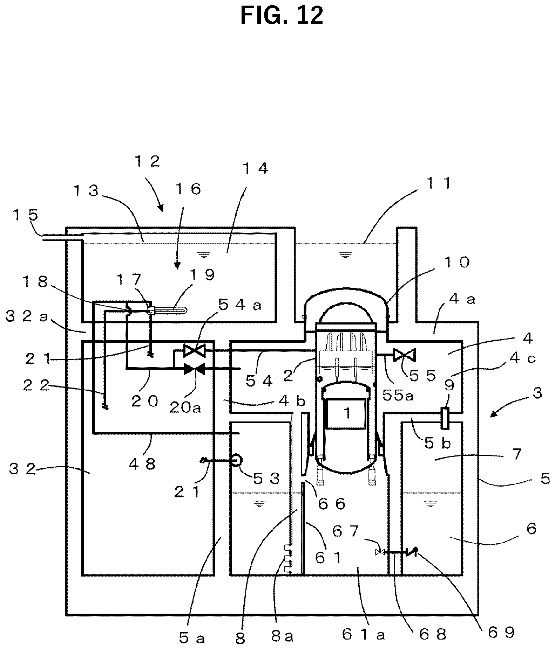

FIG. 12 is a sectional elevational view showing a configuration around a containment vessel of a nuclear plant according to a twelfth embodiment of the present invention. Points where the twelfth embodiment is different from the conventional SATOR are that a reactor pressure vessel gas supply pipe 54, a reactor pressure vessel gas supply pipe isolation valve 54a and an equalizing valve 55 are further added like the embodiment 5. In the case of the SATOR, the equalizing valve 55 is not necessary because the depth of a suppression pool 6 is deep. Owing to this, it becomes possible to use a passive containment cooling system 12 in an in-vessel steam cooling mode. It becomes possible to cool an in-core residual debris sufficiently by an air-cooling effect of steam. The other configuration of the passive containment cooling system 12 according to the twelfth embodiment is the same as that of the eleventh embodiment.

### Thirteenth Embodiment

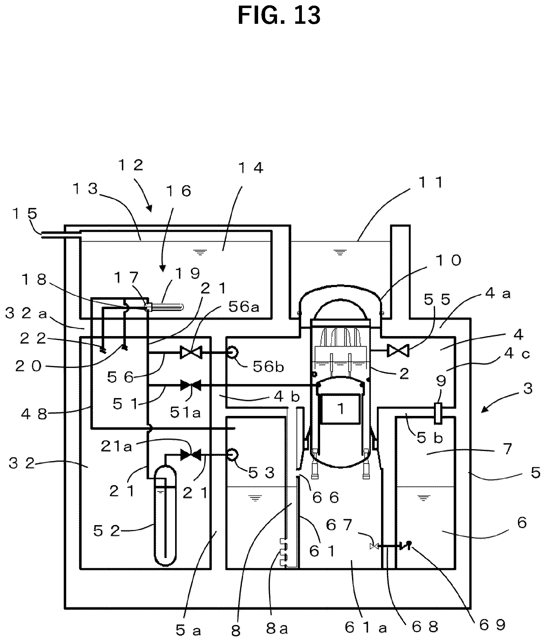

FIG. 13 is a sectional elevational view showing a configuration around a containment vessel of a nuclear plant according to a thirteenth embodiment of the present invention. Points where the thirteenth embodiment is different from the conventional SATOR are that a dry well spray pipe 56, a dry well spray pipe isolation valve 56a, and a dry well spray sparger 56b are further added like the embodiment 6. The dry well spray sparger 56b may use a containment spray sparger of a RHR (not shown). Owing to this, even in a case of a core melt accident after a main steam pipe break, it is possible to use a passive containment cooling system 12 in a dry well spray mode and reduce the temperature in an upper dry well 4c sufficiently low by cooling decay heat of radioactive materials deposited on a wall or a floor of the upper dry well 4c. The other configuration of the passive containment cooling system 12 according to the thirteenth embodiment is the same as that of the twelfth embodiment.

### Fourteenth Embodiment

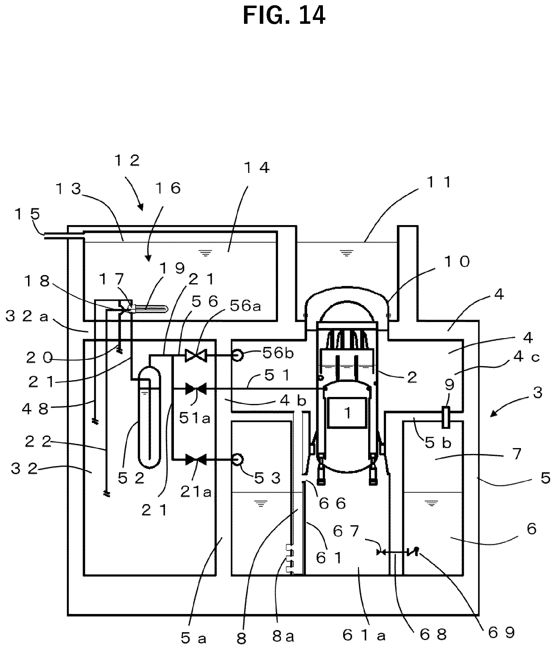

FIG. 14 is a sectional elevational view showing a configuration around a containment vessel of a nuclear plant according to a fourteenth embodiment of the present invention. Points where the fourteenth embodiment is different from the conventional SATOR are that a backflow prevention device (a water seal tank) 52 is further installed on a part of a condensate return pipe 21 which is an upper stream of a connection point of a dry well spray pipe 56 and a condensate return pipe 21, like the seventh embodiment. Owing to this, it becomes possible to prevent gases in a dry well 4 from flowing back in the dry well spray pipe 56 and flowing into a heat exchanger 16 of a passive containment cooling system 12. Owing to this, by keeping a dry well spray pipe isolation valve 56a open during normal operation, it becomes possible to operate the passive containment cooling system 12 in a dry well spray mode in a loss of coolant accident and depressurize the dry well 4 immediately after an occurrence of an accident. The other configuration of the passive containment cooling system 12 according to the fourteenth embodiment is the same as that of the thirteenth embodiment.

### <Other Embodiments>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

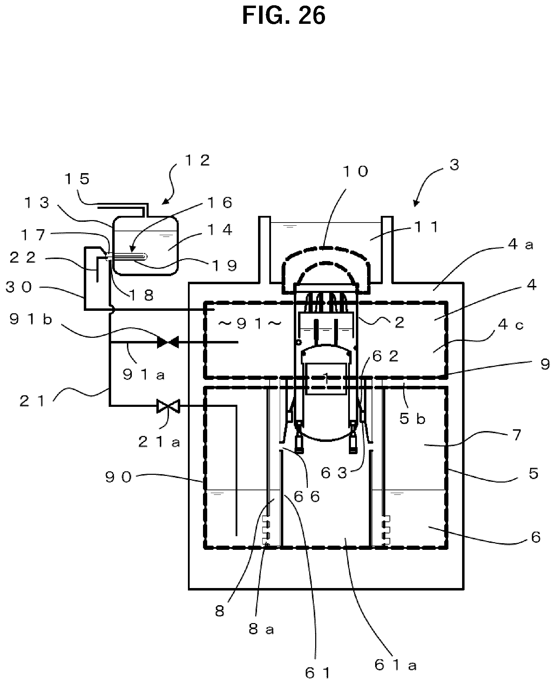

### < Explanation Relating to FIG. 26: Features Common to Embodiments >

Common features to the embodiments 1 to 14 are described below with reference to FIG. 26. In the embodiments according to the present invention, at least one gas supply pipe 30 is installed to supply gases in a containment vessel 3 to a heat exchanger 16, wherein one end of the gas supply pipe 30 is connected to an inlet plenum 17 of the heat exchanger 16 and the other end of the gas supply pipe 30 is connected to inside of the containment vessel 3. Although in FIG. 26 one end of the gas supply pipe 30 is connected to an upper dry well 4c, it is not limited to this example. Gases in the containment vessel 3 include gases in a reactor pressure vessel 2 and a wet well gas phase 7. Further, a condensate return pipe 21 is installed to return condensate in the heat exchanger 16 into a lower region 90 of the containment vessel 3, wherein one end of the condensate return pipe 21 is connected to an outlet plenum 18 of the heat exchanger 16 and the other end of the condensate return pipe 21 is connected to the lower region 90 of the containment vessel 3. Although in FIG. 26 the condensate return pipe 21 is led into a suppression pool 6, it is not limited to this example. The lower region includes the wet well gas phase 7 and a lower dry well 61a. Further, in the embodiments according to the present invention, at least one upper region injection pipe 91a is installed to inject the condensate into an upper region 91 of the containment vessel 3, wherein the upper region injection pipe 91a branches from the condensate return pipe 21. Although in FIG. 26 the upper region injection pipe 91a is connected to the upper dry well 4c, it is not limited to this example. The upper region 91 includes components in the upper region 91. For example, the upper region 91 includes the reactor pressure vessel 2. Further, a gas vent pipe 22 is installed to vent gases in the outlet plenum 18 to outside of the heat exchanger 16, wherein one end of the gas vent pipe 22 is connected to the outlet plenum 18 of the heat exchanger 16. The outside of the heat exchanger 16 includes the suppression pool 6 and a scrubbing pool 33. By the way, in FIGS. 1 to 14, although a same configuration of a core 1, a reactor pressure vessel 2, and a containment vessel 3 is shown as that of the ABWR, it is not limited thereto. The passive containment cooling system 12 according to the present invention can be used for all nuclear plants which use a pressure suppression type containment vessel.

### EXPLANATION OF THE REFERENCE NUMERALS

1: core; 2: reactor pressure vessel (RPV); 2a: shroud; 2b: shroud head; 2c: head portion; 2d: downcomer; 2e: steam dome; 2f: lower plenum; 2g: bottom head; 2s: vapor phase; 3: containment vessel (PCV); 4: dry well; 4a: top slab; 4b: dry well common part wall; 4c: upper dry well; 5: wet well; 5a: wet well common part wall; 5b: diaphragm floor; 6: suppression pool; 7: wet well gas phase; 8 : LOCA vent pipe; 8a: horizontal vent pipe; 9: vacuum breaker; 10 : top head; 10a: top head section; 11: water shield; 12: passive containment cooling system (PCCS); 13: cooling water pool; 14: cooling water; 15: exhaust port; 16: heat exchanger, PCCS heat exchanger; 17: inlet plenum; 18: outlet plenum; 19: heat exchanger tube; 20: dry well gas supply pipe; 20a : dry well gas supply pipe isolation valve; 21: condensate return pipe; 21a:condensate return pipe isolation valve; 22: gas vent pipe; 22a: gas vent fan; 22b: backflow prevention valve; 23: tube plate; 24: PCCS drain tank; 25: anti-debris lid; 26: RPV injection pipe; 27: RPV injection pipe isolation valve; 28: gravity driven core cooling system (GDCS) pool; 29: piping space; 30: gas supply pipe; 32: outer well; 32a: top slab; 33: scrubbing pool; 33a : lid; 33b: space; 33c : first outlet pipe; 34: metal fiber filter; 34a: second outlet pipe; 40: reactor internal pumps; 41: pump deck; 42: diffusers; 43: separators; 44:steam dryers; 45: dryer skirt; 46: sparger, a low-pressure flooder system sparger; 47: sparger, high-pressure core flooder system sparger; 48 : wet well gas supply pipe; 50: feedwater sparger; 51: reactor pressure vessel injection pipe; 51a: reactor pressure vessel injection pipe isolation valve; 52: backflow prevention device; 53: wet well sparger; 54: reactor pressure vessel (RPV) gas supply pipe; 54a: reactor pressure vessel (RPV) gas supply pipe isolation valve; 55: equalizing valve; 55a: stub pipe; 56: dry well spray pipe; 56a: dry well spray pipe isolation valve; dry well spray sparger 56b; 61: pedestal; 61a: pedestal cavity (lower dry well); 62: RPV skirt (vessel skirt); 63: RPV support (vessel support); 64: fusible valve; 65: lower dry well flooder pipes; 66: openings; 67: flooder valve; 68: flooder pipe; 69 : check valve (flooder check valve); 71: main steam pipe; 72: safety relief valve (SRV); 73: discharge pipe; 74: flange; 75 : platform; 76: manholes ; 77: ventilation ducts; 90: lower region; 91: upper region; 91a: upper region injection pipe; 91b: upper region injection pipe isolation valve; 92: high-pressure core flooder system (HPCF); 93: high-pressure core flooder system pump; 94: suction pipe; 95: high-pressure core flooder system injection pipe; 96: high-pressure core flooder system outer isolation valve; 97: high-pressure core flooder system inner isolation valve; 100: reactor building

## Claims

1. A nuclear plant comprising:
a core (1),
a reactor pressure vessel (2) containing the core (1),
a shroud (2a) surrounding the core (1) in the reactor pressure vessel (2),
a shroud head (2b) installed on an upper part of the shroud (2a),
a containment vessel (3) including:
a dry well (4) containing the reactor pressure vessel (2),
a wet well (5) containing a suppression pool (6) in a lower part thereof, and a wet well gas phase (7) in an upper part thereof,
a LOCA vent pipe (8) connecting the dry well (4) and the suppression pool (6), and
a vacuum breaker (9) that returns gases in the wet well gas phase (7) to the dry well (4),
a pedestal (61) that supports the reactor pressure vessel (2) in the containment vessel (3) via an RPV skirt (62) and an RPV support (63) and forms a pedestal cavity (61a) inside,
an upper dry well (4c) that is an upper portion of the dry well (4) above the RPV skirt (62),
a top slab (4a) that constitutes a ceiling of the upper dry well (4c),
a diaphragm floor (5b) that constitutes a ceiling of the wet well (5) and a floor of the upper dry well (4c),
an upper region (91) that is a region of the upper dry well (4c) above the diaphragm floor (5b) and below the top slab (4a),
a lower region (90) that is a region of the containment vessel (3) below the diaphragm floor (5b),
a passive containment cooling system (12) including:
a cooling water pool (13) that is installed above the dry well (4) and reserves cooling water (14);
a heat exchanger (16) that has an inlet plenum (17), an outlet plenum (18), and a heat exchanger tube (19), and is submerged at least in part in the cooling water (14);
at least one gas supply pipe (30) that is connected to the inlet plenum (17) of the heat exchanger (16) at one end, passes outside of the cooling water pool (13) and the containment vessel (3), penetrates the containment vessel (3), and connected to inside of the containment vessel (3) at the other end to lead gases in the containment vessel (3) to the heat exchanger (16);
a gas supply pipe isolation valve installed on the gas supply pipe (30) and arranged outside of the containment vessel (3);
a condensate return pipe (21) that is connected to the outlet plenum (18) of the heat exchanger (16) at one end, passes outside of the cooling water pool (13) and the containment vessel (3), penetrates the containment vessel (3), and is connected to the lower region (90) of the containment vessel (3) at the other end to lead condensate in the heat exchanger (16) into the lower region (90) of the containment vessel (3);
a condensate return pipe isolation valve (21a) installed on the condensate return pipe (21) and arranged outside of the containment vessel (3);
at least one upper region injection pipe (91a) that branches form the condensate return pipe (21) at outside of the containment vessel (3), passes outside of the cooling water pool (13) and the containment vessel (3), penetrates the containment vessel (3) to inject condensate into the upper region (91) of the containment vessel (3);
an upper region injection pipe isolation valve (91b) installed on the upper region injection pipe (91a) and arranged outside of the containment vessel (3); and
a gas vent pipe (22) that is connected to the outlet plenum (18) of the heat exchanger (16) at one end and passes outside of the cooling water pool (13) and the containment vessel (3) to release gases in the outlet plenum (18) to outside of the heat exchanger (16), wherein
the passive containment cooling system (12) is configured to open the condensate return pipe isolation valve (21a) and close the upper region injection pipe isolation valve (91b) when the passive containment cooling system (12) injects condensate into the lower region (90), and the passive containment cooling system (12) is configured to open the upper region injection pipe isolation valve (91b) and close the condensate return pipe isolation valve (21a) when the passive containment cooling system (12) injects condensate into the upper region (91).

2. The nuclear plant according to claim 1, further comprising a passive containment cooling system (12), wherein
the upper region injection pipe (91a) is connected at one end to the reactor pressure vessel (2) and constitutes a reactor pressure vessel injection pipe (51) to inject condensate into the reactor pressure vessel (2).

3. The nuclear plant according to claim 1, further comprising a passive containment cooling system (12), wherein
the gas vent pipe (22) is connected at one end to the wet well (5) and a gas vent fan (22a) is installed on the gas vent pipe (22).

4. The nuclear plant according to claim 1, further comprising a passive containment cooling system (12) including:
a backflow prevention device (52) installed in the middle of the condensate return pipe (21);
the condensate return pipe (21) connected to the wet well gas phase (7) at one end, wherein
the condensate return pipe (21) can spray condensate in the heat exchanger (16) into the wet well gas phase (7).

5. The nuclear plant according to claim 1, further comprising a passive containment cooling system (12), wherein
the upper region injection pipe (91a) is connected at one end to the shroud head (2b) in the reactor pressure vessel (2) and constitutes a reactor pressure vessel injection pipe (51) that can inject condensate into the shroud head (2b).

6. The nuclear plant according to claim 1, further comprising a passive containment cooling system (12), wherein
the upper region injection pipe (91a) is connected at one end to a high-pressure core flooder system injection pipe (95) of a high-pressure core flooder system (92), can spray condensate into the shroud head (2b) through a high-pressure core flooder system injection pipe (95) and a high-pressure core flooder system sparger (47), and does not need to connect an additional pipe to the shroud head (2b).

7. The nuclear plant according to claim 1, further comprising a passive containment cooling system (12), wherein
the gas supply pipe (30) is connected at one end to the reactor pressure vessel (2) and constitutes a reactor pressure vessel gas supply pipe (54) that supplies gases in the reactor pressure vessel (2) to the heat exchanger (16).

8. The nuclear plant according to claim 1, further comprising an equalizing valve (55) installed in the dry well (4) and connected to a vapor phase (2s) of the reactor pressure vessel (2) via a pipe, wherein
under a condition that the reactor pressure vessel (2) is broken and depressurized, the equalizing valve (55) can further equalize the pressure in the reactor pressure vessel (2) to the pressure in the dry well (4).

9. The nuclear plant according to claim 1, further comprising a passive containment cooling system (12), wherein
the upper region injection pipe (91a) is connected to a dry well spray sparger (56b) in the upper dry well (4c) and constitutes a dry well spray pipe (56) that sprays condensate into the upper dry well (4c).

10. The nuclear plant according to claim 1, further comprising a passive containment cooling system (12) including:
a backflow prevention device (52) installed in the middle of the condensate return pipe (21) at an upper stream of a branch point of a dry well spray pipe (56) from the condensate return pipe (21), wherein
the backflow prevention device (52) can prevent gases in the dry well (4) from flowing back in the dry well spray pipe (56) so that a dry well spray pipe isolation valve (56a) can be opened during normal operation.

11. The nuclear plant according to claims 1, 2, 4, 5, 6, 7, 8, 9, 10, further comprising:
an outer well (32) that is arranged outside the dry well (4) and the wet well (5), adjoins the dry well (4) via a dry well common part wall (4b), adjoins the wet well (5) via a wet well common part wall (5a), surrounds completely the dry well common part wall (4b) and the wet well common part wall (5a), and has pressure resistance and gastightness equivalent to pressure resistance and gastightness of the dry well (4) and the wet well (5),
a scrubbing pool (33) that is arranged in the outer well (32) and stores water inside,
a passive containment cooling system (12) including:
a cooling water pool (13) that is installed above the dry well (4) and the outer well (32) and reserves cooling water (14);
a heat exchanger (16) that has an inlet plenum (17), an outlet plenum (18), and a heat exchanger tube (19), and is submerged at least in part in the cooling water (14);
a wet well gas supply pipe (48) that is connected to the inlet plenum (17) of the heat exchanger (16) at one end and connected to the wet well gas phase (7) at the other end to lead gases in the wet well gas phase (7) to the heat exchanger (16); and
a gas vent pipe (22) that is connected to the outlet plenum (18) of the heat exchanger (16) at one end, passes in the outer well (32), has the other end installed as submerged in the water in the scrubbing pool (33) in the outer well (32), and releases gases in the heat exchanger (16) to the outer well (32), wherein
the gas supply pipe (30), the condensate return pipe (21) and the upper region injection pipe (91a) pass at least in part inside of the outer well (32).

## Amended claims

### Amended claims under Art. 19.1 PCT

1. A nuclear plant comprising:
a core (1),
a reactor pressure vessel (2) containing the core (1),
a shroud (2a) surrounding the core (1) in the reactor pressure vessel (2),
a shroud head (2b) installed on an upper part of the shroud (2a),
a containment vessel (3) including:
a dry well (4) containing the reactor pressure vessel (2),
a wet well (5) containing a suppression pool (6) in a lower part thereof, and a wet well gas phase (7) in an upper part thereof,
a LOCA vent pipe (8) connecting the dry well (4) and the suppression pool (6), and
a vacuum breaker (9) that returns gases in the wet well gas phase (7) to the dry well (4),
a pedestal (61) that supports the reactor pressure vessel (2) in the containment vessel (3) via an RPV skirt (62) and an RPV support (63) and forms a pedestal cavity (61a) inside,
an upper dry well (4c) that is an upper portion of the dry well (4) above the RPV skirt (62),
a top slab (4a) that constitutes a ceiling of the upper dry well (4c),
a diaphragm floor (5b) that constitutes a ceiling of the wet well (5) and a floor of the upper dry well (4c),
an upper region (91) that is a region of the upper dry well (4c) above the diaphragm floor (5b) and below the top slab (4a),
a lower region (90) that is a region of the containment vessel (3) below the diaphragm floor (5b),
a passive containment cooling system (12) including:
a cooling water pool (13) that is installed above the dry well (4) and reserves cooling water (14);
a heat exchanger (16) that has an inlet plenum (17), an outlet plenum (18), and a heat exchanger tube (19), and is submerged at least in part in the cooling water (14);
at least one gas supply pipe (30) that is connected to the inlet plenum (17) of the heat exchanger (16) at one end, passes outside of the cooling water pool (13) and the containment vessel (3), penetrates the containment vessel (3), and connected to inside of the containment vessel (3) at the other end to lead gases in the containment vessel (3) to the heat exchanger (16);
a gas supply pipe isolation valve installed on the gas supply pipe (30) and arranged outside of the containment vessel (3);
a condensate return pipe (21) that is connected to the outlet plenum (18) of the heat exchanger (16) at one end, passes outside of the cooling water pool (13) and the containment vessel (3), penetrates the containment vessel (3), and is connected to the lower region (90) of the containment vessel (3) at the other end to lead condensate in the heat exchanger (16) into the lower region (90) of the containment vessel (3);
a condensate return pipe isolation valve (21a) installed on the condensate return pipe (21) and arranged outside of the containment vessel (3);
at least one upper region injection pipe (91a) that branches form the condensate return pipe (21) at outside of the containment vessel (3), passes outside of the cooling water pool (13) and the containment vessel (3), penetrates the containment vessel (3) to inject condensate into the upper region (91) of the containment vessel (3);
an upper region injection pipe isolation valve (91b) installed on the upper region injection pipe (91a) and arranged outside of the containment vessel (3); and
a gas vent pipe (22) that is connected to the outlet plenum (18) of the heat exchanger (16) at one end and passes outside of the cooling water pool (13) and the containment vessel (3) to release gases in the outlet plenum (18) to outside of the heat exchanger (16), wherein
the passive containment cooling system (12) is configured to open the condensate return pipe isolation valve (21a) and close the upper region injection pipe isolation valve (91b) when the passive containment cooling system (12) injects condensate into the lower region (90), and the passive containment cooling system (12) is configured to open the upper region injection pipe isolation valve (91b) and close the condensate return pipe isolation valve (21a) when the passive containment cooling system (12) injects condensate into the upper region (91).

2. The nuclear plant according to claim 1, further comprising a passive containment cooling system (12), wherein
the upper region injection pipe (91a) is connected at one end to the reactor pressure vessel (2) and constitutes a reactor pressure vessel injection pipe (51) to inject condensate into the reactor pressure vessel (2).

3. The nuclear plant according to claim 1, further comprising a passive containment cooling system (12), wherein
the gas vent pipe (22) is connected at one end to the wet well (5) and a gas vent fan (22a) is installed on the gas vent pipe (22).

4. The nuclear plant according to claim 1, further comprising a passive containment cooling system (12) including:
a backflow prevention device (52) installed in the middle of the condensate return pipe (21);
the condensate return pipe (21) connected to the wet well gas phase (7) at one end, wherein
the condensate return pipe (21) can spray condensate in the heat exchanger (16) into the wet well gas phase (7).

5. The nuclear plant according to claim 1, further comprising a passive containment cooling system (12), wherein
the upper region injection pipe (91a) is connected at one end to the shroud head (2b) in the reactor pressure vessel (2) and constitutes a reactor pressure vessel injection pipe (51) that can inject condensate into the shroud head (2b).

6. The nuclear plant according to claim 1, further comprising a passive containment cooling system (12), wherein
the upper region injection pipe (91a) is connected at one end to a high-pressure core flooder system injection pipe (95) of a high-pressure core flooder system (92), can spray condensate into the shroud head (2b) through a high-pressure core flooder system injection pipe (95) and a high-pressure core flooder system sparger (47), and does not need to connect an additional pipe to the shroud head (2b).

7. The nuclear plant according to claim 1, further comprising a passive containment cooling system (12), wherein
the gas supply pipe (30) is connected at one end to the reactor pressure vessel (2) and constitutes a reactor pressure vessel gas supply pipe (54) that supplies gases in the reactor pressure vessel (2) to the heat exchanger (16).

8. The nuclear plant according to claim 1, further comprising an equalizing valve (55) installed in the dry well (4) and connected to a vapor phase (2s) of the reactor pressure vessel (2) via a pipe, wherein
under a condition that the reactor pressure vessel (2) is broken and depressurized, the equalizing valve (55) can further equalize the pressure in the reactor pressure vessel (2) to the pressure in the dry well (4).

9. The nuclear plant according to claim 1, further comprising a passive containment cooling system (12), wherein
the upper region injection pipe (91a) is connected to a dry well spray sparger (56b) in the upper dry well (4c) and constitutes a dry well spray pipe (56) that sprays condensate into the upper dry well (4c).

10. The nuclear plant according to claim 1, further comprising a passive containment cooling system (12) including:
a backflow prevention device (52) installed in the middle of the condensate return pipe (21) at an upper stream of a branch point of a dry well spray pipe (56) from the condensate return pipe (21), wherein
the backflow prevention device (52) can prevent gases in the dry well (4) from flowing back in the dry well spray pipe (56) so that a dry well spray pipe isolation valve (56a) can be opened during normal operation.

11. The nuclear plant according to claims 1, 2, 4, 5, 6, 7, 8, 9, 10, further comprising:
an outer well (32) that is arranged outside the dry well (4) and the wet well (5), adjoins the dry well (4) via a dry well common part wall (4b), adjoins the wet well (5) via a wet well common part wall (5a), surrounds completely the dry well common part wall (4b) and the wet well common part wall (5a), and has pressure resistance and gastightness equivalent to pressure resistance and gastightness of the dry well (4) and the wet well (5),
a scrubbing pool (33) that is arranged in the outer well (32) and stores water inside,
a passive containment cooling system (12) including:
a cooling water pool (13) that is installed above the dry well (4) and the outer well (32) and reserves cooling water (14);
a heat exchanger (16) that has an inlet plenum (17), an outlet plenum (18), and a heat exchanger tube (19), and is submerged at least in part in the cooling water (14);
a wet well gas supply pipe (48) that is connected to the inlet plenum (17) of the heat exchanger (16) at one end and connected to the wet well gas phase (7) at the other end to lead gases in the wet well gas phase (7) to the heat exchanger (16); and
a gas vent pipe (22) that is connected to the outlet plenum (18) of the heat exchanger (16) at one end, passes in the outer well (32), has the other end installed as submerged in the water in the scrubbing pool (33) in the outer well (32), and releases gases in the heat exchanger (16) to the outer well (32), wherein
the gas supply pipe (30), the condensate return pipe (21) and the upper region injection pipe (91a) pass at least in part inside of the outer well (32).

Statement under Art. 19.1 PCT
Claim 1 is amended to clearly state that a main part of each pipe and each isolation valve of a passive containment cooling system are arranged outside of a containment vessel.

Referenced documents 1 and 2 both do not meet the limitation of Claim1 because each pipe and each isolation valve of a passive containment cooling system are all arranged inside of a containment vessel.

The present invention takes into account the fact that the accident of the unit 1 of the Fukushima Daiichi was caused by a failure to open an isolation valve of a passive safety system which was arranged in the containment vessel and resulted in a core melt accident. The present invention attained an effect of improvement of reliability of isolation valves of a passive containment cooling system by arranging them outside of a containment vessel whose inside is highly heated up in a core melt accident.

Claim 3 is amended to clearly state that the gas vent pipe is connected to the wet well.

Referenced document 3 does not meet the limitation of Claim 3 because the gas vent pipe is connected to the dry well.

Claim 6 is amended to clearly state that the upper region injection pipe can spray condensate into the shroud head through an existing high-pressure core flooder system injection pipe and an existing high-pressure core flooder system sparger.

Referenced document 4 does not have a structure and a function to spray condensate through a pipe which is connected to inside of a shroud head and a sparger installed inside of a shroud head.

The present invention has attained an effect to eliminate necessity to install and connect an additional pipe to a shroud head.

Claim 10 is amended to correct an error of claim number.

The above-mentioned amendments of claims do not cause any changes to description and drawings.
